(19) Europäisches Patentamt / European Patent Office / Office européen des brevets

(11) **EP 2 596 472 B1**

(12) # EUROPÄISCHE PATENTSCHRIFT

(45) Veröffentlichungstag und Bekanntmachung des Hinweises auf die Patenterteilung:
**25.06.2014 Patentblatt 2014/26**

(51) Int Cl.:
**G06T 7/00** *(2006.01)*    **G02B 21/36** *(2006.01)*
**G06T 3/40** *(2006.01)*

(21) Anmeldenummer: **11746248.1**

(22) Anmeldetag: **22.08.2011**

(86) Internationale Anmeldenummer:
**PCT/EP2011/064376**

(87) Internationale Veröffentlichungsnummer:
**WO 2012/025488 (01.03.2012 Gazette 2012/09)**

(54) **MOSAIKAUFNAHMEERZEUGUNG**

MOSAIC IMAGE GENERATION

PRODUCTION DE PRISES DE VUE SOUS FORME DE MOSAÏQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.08.2010 DE 102010039652**

(43) Veröffentlichungstag der Anmeldung:
**29.05.2013 Patentblatt 2013/22**

(73) Patentinhaber: **Fraunhofer-Gesellschaft zur Förderung der angewandten Forschung e.V.
80686 München (DE)**

(72) Erfinder:
• **STECKHAN, Dirk**
  **81827 München (DE)**
• **PAULUS, Dietrich**
  **56072 Koblenz (DE)**
• **ELTER, Matthias**
  **91054 Erlangen (DE)**
• **ZERFASS, Thorsten**
  **90408 Nürnberg (DE)**
• **WITTENBERG, Thomas**
  **91054 Erlangen (DE)**

(74) Vertreter: **Schenk, Markus et al
Patentanwälte Schoppe, Zimmermann, Stöckeler, Zinkler & Partner
Postfach 246
82043 Pullach bei München (DE)**

(56) Entgegenhaltungen:
**US-A1- 2010 188 743**

• **DIRK STECKHAN ET AL: "Efficient large scale image stitching for virtual microscopy", ENGINEERING IN MEDICINE AND BIOLOGY SOCIETY, 2008. EMBS 2008. 30TH ANNUAL INTERNATIONAL CONFERENCE OF THE IEEE, IEEE, PISCATAWAY, NJ, USA, 20. August 2008 (2008-08-20), Seiten 4019-4023, XP031508891, ISBN: 978-1-4244-1814-5 in der Anmeldung erwähnt**
• **DIRK STECKHAN ET AL: "A quadratic programming approach for the mosaicing of virtual slides that incorporates the positioning accuracy of the microscope stage", 2010 ANNUAL INTERNATIONAL CONFERENCE OF THE IEEE ENGINEERING IN MEDICINE AND BIOLOGY SOCIETY : (EMBC 2010) ; BUENOS AIRES, ARGENTINA, 31 AUGUST - 4 SEPTEMBER 2010, IEEE, PISCATAWAY, NJ, USA, 31. August 2010 (2010-08-31), Seiten 72-77, XP031883085, DOI: 10.1109/IEMBS.2010.5626241 ISBN: 978-1-4244-4123-5**
• **Anonymous: "Kalman Filter", Wikipedia, 28. Juli 2010 (2010-07-28), Seiten 1-23, XP002661733, Gefunden im Internet: URL:http://en.wikipedia.org/w/index.php?ti tle=Kalman_filter&oldid=375832950 [gefunden am 2011-10-20]**

**Beschreibung**

Die vorliegende Erfindung bezieht sich auf die Erzeugung einer Mosaikaufnahme einer Objektebene, wie z.B. der Aufnahme einer Probe auf einem Objektträger.

Die konventionelle Lichtmikroskopie ist eine der häufigst verwendeten und leistungsfähigsten Techniken für die Untersuchung und die Diagnose von biologischen Proben. Diese Techniken sind allerdings durch mehrere Faktoren beschränkt. Färbemittelfarben können sich mit der Zeit verändern oder mit der Zeit verblassen. Das ist insbesondere wahr für Immunofluoreszenzfärbetechniken, die häufig nur für einen sehr kleinen Zeitraum verwendbar sind [14]. Biologische Proben tendieren dazu zu altern. Verwendete Objektträger sind aber einzigartig und können nicht reproduziert werden, wie z.B. wenn das Objektträgerglas bricht. Mikroskope visualisieren leider lediglich einen kleinen Teil eines Objektträgers zu einem Zeitpunkt und die Vergrößerungen sind begrenzt auf die zur Verfügung stehenden Objektive. Gleichzeitiges Betrachten eines Objektträgers ist beschränkt auf einen sehr kleinen Personenkreis und der Objektträger muss dabei physisch präsent sein. Es ist zudem nicht möglich, interessierende Regionen auf dem Objektträger mit einem Kommentar zu versehen.

Ein Ziel der virtuellen Mikroskopie besteht darin, diese Probleme dadurch zu lösen, dass die direkte Arbeit mit dem Mikroskop und dem Objektträger durch die Verwendung digitalisierter Proben ersetzt wird. Zu diesem Zweck wird der Objektträger einmal durch ein vollständig automatisiertes Robotermikroskop gescannt und digital abgespeichert. Solche digitalisierten Proben weisen keines der oben erwähnten Probleme auf. Zusätzlich ist es möglich, solche digitalisierten Proben aus der Entfernung von jeglichem Computer aus zu untersuchen, so als ob die Probe physisch präsent wäre. Interessierende Bereiche, wie z.B. krebsartigen Zellen, können auf dem Objektträger vermerkt werden und folglich ist es immer noch möglich, später nachzuvollziehen, wieso eine bestimmte untersuchende Person eine spezifische Diagnose stellte. Folglich kann auf lange Sicht hin die virtuelle Mikroskopie die traditionelle Mikroskopie möglicherweise ersetzen.

Allerdings bestehen immer noch Probleme, die nicht gänzlich gelöst worden sind. Eines dieser Probleme besteht in der Notwendigkeit, alle Gesichtsfeldansichten in biologischen Proben mit größeren Bereichen mit keinem Informationsinhalt, wie z.B. Proben aus der Cytometrie, korrekt auszurichten. Ein Objektträger ist einfach zu groß, um mit einem Bild mit einer vernünftigen Vergrößerung erfasst zu werden. Man stelle sich beispielsweise den Fall einer 20-fachen Vergrößerung und einer typischen Farbkamera vor, die ein 1000 x 1000 Pixelbild erzeuge und eine Zellengröße von 7,4 $\mu$m x 7,4 $\mu$m aufweise. Dies bedeutete, dass jedes Pixel einen Bereich von 0,37 $\mu$m x 0,37 $\mu$m abdeckte und jede Gesichtsfeldansicht eine Fläche von 0,37 mm x 0,37 mm besäße. Natürlich hängt es von der Art der Probe ab, die gerade gescannt wird, aber um einfach ein Beispiel zu geben, kann der valide Bereich, der gescannt werden soll, beispielsweise 2cm x 3cm betragen, was bedeutete, dass in etwa 55 x 82 = 4510 Gesichtsfeldansichten erfasst werden müssten. Der Scanprozess des zu virtualisierenden Objektträgers wird dabei üblicherweise durch computer-gesteuerte motorisierte Verfahrtische erledigt, die darüber hinaus genau kalibriert werden müssen. Unabhängig davon aber, wie genau sie kalibriert sind, weisen Verfahrtische immer Positionierungsfehler auf, die sich ihrerseits wiederum während des Scanprozesses kumulieren und folglich zu Ausrichtungsfehlern in dem virtuellen Bild des Objektträgers führen können. Folglich besteht eine große Herausforderung bei der virtuellen Mikroskopie darin, Algorithmen zu entwickeln, die alle erfassten Gesichtsfeldansichten auf eine solche Art und Weise zueinander ausrichten, dass der ursprünglich gescannte Objektträger vollständig rekonstruiert ist.

Der herkömmliche Ansatz zum mosaikartigen Zusammenfügen von Gesichtsfeldansichten besteht darin, den Objektträger in einem ersten Schritt zu scannen und in einem zweiten Schritt jede Gesichtsfeldansicht zu ihren benachbarten Gesichtsfeldansichten auszurichten, woraufhin manchmal ein Optimierungsschritt folgt. Nach einem naiven Ansatz werden die Gesichtsfeldansichten einfach der Reihe nach zueinander ausgerichtet, in der Reihenfolge, wie sie erfasst worden sind. Besser ist es da, das Mosaik durch Optimierung unter Berücksichtigung der Wechselwirkungen zwischen der Änderung der relativen Lage zweier Gesichtsfeldansichten auf das Zusammenpassen der anderen Gesichtsfeldaufnahmen zu berücksichtigen.

In anderen Worten ausgedrückt, besteht in der virtuellen Mikroskopie das Problem des Zusammenfügens von aneinandergrenzenden mikroskopischen Ansichten zu einem zusammenhängenden größeren Bild, das auch Mosaik genannt wird. Ein Mikroskopieträger wird digitalisiert, indem eine computer-gesteuerte Bühne kontrolliert verfahren wird, wobei nach jedem Verfahrvorgang ein Bild aufgenommen wird. Die Bühne wird jeweils um einen definiertem Weg verfahren, so dass das nächste Ansichtsfeld entweder direkt an das Vorhergehende grenzt oder zum Vorhergehenden definiert überlappt. Die Mechanik von Mikroskopbühnen ist jedoch ungenau, so dass es zu Fehlpositionierungen kommt. üblicherweise werden die aufgenommenen Ansichtsfelder deswegen in einem zweiten Schritt softwareseitig zueinander registriert. Hierbei kommen verschiedene Ähnlichkeitsmaße, wie z.B. flächenbasierte SSD- oder Kreuzkorrelation oder Kleinste-Quadrate Korrelation sowie merkmalsbasierte Maße zum Einsatz. Der genaue Positionierungsoffset bzw. die Transformation zwischen zwei Bildern wird bestimmt, indem die Position bestimmt wird, in der das Ähnlichkeitsmaß im Überlappbereich sein Maximum erreicht.

Die so bestimmten Transformationen können dazu verwendet werden, das Mosaik sequentiell, wie z.B. meanderförmig, zusammenzusetzen. Da jedoch auch die softwareseitige Registrierungsbestimmung fehlerbehaftet ist, akkumulieren sich bei einem solchen Ansatz Ausrichtungsfehler und es kommt zu einem sichtbaren Versatz der Ansichtsfelder im Mosaik.

Die Notwendigkeit für ein ganzheitlich arbeitendes Optimierungsschema wird offensichtlich, wenn man drei Bilder betrachtet, die gegeneinander ausgerichtet worden sind, und somit in drei Transformationen, wie z.B. translatorichen Verschiebungen um einen Versatzvektor, resultieren, um die drei Bilder korrekt zueinander auszurichten. In einer perfekten Umgebung werden diese Transformationen in einem überbestimmten, aber konsistenten Gleichungssystem resultieren: Wenn sie hintereinander geschaltet werden, ergeben sie eine Identitätstransformation. Da aber die Transformationen Messungen an realen Bildern sind, die Rauschen ausgesetzt sind und anderen Verschlechterungen, sind die Transformationen fehleranfällig. Die Idee der Optimierung besteht darin, die durchschnittlichen Messfehler zu minimieren, indem dieselben beispielsweise gleichmäßig über alle Transformationen hinweg verteilt werden.

Es gibt einige Ansätze, die das Problem zu lösen versuchen, dass sich Fehlausrichtungen bei einer sequentiellen Ausrichtung der Teilbilder akkumulieren können. Wie im Vorhergehenden beschrieben, sollten die Transformationen nicht nur sequentiell in Betracht gezogen werden, sondern die Transformationen aus allen Überlappungsbereichen, wie z.B. in [7]. Dabei wird ein Gleichungssystem aufgestellt, das mittels Ausgleichsrechnung oder anderen Optimierungsverfahren gelöst werden kann. Unter diese Ansätze fällt auch die in [6] beschriebene Technik.

Da die bestimmten Transformationen auf Beobachtungen beruhen, sind sie nicht alle exakt. Die Lösung eines solchermaßen gestörten Gleichungssystems wird deswegen immer noch fehlerhaft sein. Wünschenswert wäre eine Vorgehensweise, die diese Fehler minimiert.

Einige Arbeiten haben sich bereits intensiv mit dem oben dargelegten Problem beschäftigt. Diese Mosaikbildungsalgorithmen können dabei üblicherweise in zwei separate Schritte eingeteilt werden. In dem ersten Schritt werden benachbarte Bilder paarweise durch Anwenden eines flächen-basierten oder merkmals-basierten Ausrichtungsalgorithmus zueinander ausgerichtet. Die so geschätzten Transformationsparameter werden dann in einem zweiten Schritt im Bündel angepasst, um einen global konsistenten Transformationsraum zu erhalten. Szeliski [3] hat einen maßgeblichen Überblick über sowohl lokale als auch globale Bildaneinanderfügungsverfahren vorgestellt. Szeliskis Fokus liegt aber auf der Ausrichtung von Mehrfachansichtsbildern und der Erzeugung von Panoramabildern unter affinen Transformationsbedingungen. Das stellt aber ein allgemeineres Problem dar, als es sich bei der virtuellen Mikroskopie stellt, wo der Transformationsraum der Bilder strikt translatorisch ist. In der virtuellen Mikroskopie bedarf es folglich spezialisierterer Mosaikbildungsalgorithmen, um ein optimales Mosaik zu erhalten.

Davis [4] beschäftigt mit dem Aneinanderfügen von Szenen mit sich bewegenden Objekten. Davis erhielt ein System von linearen Gleichungen aus paarweisen Ausrichtungen und löste das System unter Verwendung eines kleinste-Quadrate-Lösungsansatzes, um einen global-optimierten Transformationsraum zu erhalten. Problematisch an Davids Lösungsansatz ist, dass durch das Lösen des Systems in einem kleinsten-Fehlerquadrat-Sinne Davis den Fehler gleichmäßig über alle Transformationen verteilt. Dies ist aber nur dann gerechtfertigt, falls der Fehler in den Transformationen strikt gaussförmig ist, was nicht immer der Fall ist. Kang et al [5] schlägt einen Graphen-theoretischen Lösungsansatz für die globale Ausrichtung von 2D-Mosaiken unter projektiven Transformationsnebenbedingungen vor. Überraschenderweise gibt es nur wenige Artikel, die sich mit dem Zusammenfügen von virtuellen Objektträgern unmittelbar beschäftigen. Sun et al verwenden Merkmalsmatching mit dem Harris-Corner-Detektor und führen eine globale geometrische Korrektur mit einer objektiven Funktion durch, die den euklidischen Abstand zwischen den Merkmalspunkten minimiert, wenn die Transformation angewendet wird, [6]. Appleton et al gehen das Bildzusammenfügungsproblem als ein globales Optimierungsproblem an [7]. Sie verwenden eine dynamische Programmierung und eine Ähnlichkeitsfunktion, um eine komplette Zeile von Bildern mit zuvor platzierten Schaltern zu einem Zeitpunkt zu platzieren. Da sie aber lediglich eine Zeile zu einem Zeitpunkt platzieren, handelt es sich hierbei lediglich teilweise um eine globale Optimierung, welche, damit sie vollständig wäre, das Setzen aller Bilder auf einmal erfordern würde. Zusätzlich benötigte das dort vorgestellte Verfahren einen Überlapp von 45% zwischen den Bildern, um gute Resultate zu erzielen. Dies resultiert wiederum in einer sehr langen Scannzeitdauer. In [8] wurde Davis [4] Idee der Erzeugung eines linearen Gleichungssystems für das Optimierungsproblem verwendet und durch Gewichtung jeder Transformation gemäß ihrer Zuverlässigkeit gewichtet. Folglich wurde das Gleichungssystem in einem gewichteten kleinsten-Fehlerquadrat-Sinne gelöst. Dieser Lösungsansatz brachte objektiv verbesserte Resultate, verglichen zu dem ungewichteten Lösungsansatz. Unter bestimmten Bedingungen jedoch weist auch letzterer Lösungsansatz immer noch Fehler auf. Meistens bei Objektträgern mit signifikant großen Bereichen niedrigen Informationsinhaltes und folglich niedrigen Korrelationswerten werden einige der Teilbilder in diesen Bereichen nicht korrekt umpositioniert.

In [14] wird eine Methode zur automatischen Erstellung eines virtuellen Mikroskopieträgers beschrieben. Die Positionierung der Bilder erfolgt einzig auf Basis der fehlerhaften Positionierungseigenschaften der Bühne.

In [18] wird eine Methode zur softwaretechnischen Registrierung von virtuellen Mikroskopieträgern beschrieben. Es wird jedoch immer nur der aktuell am Bildschirm wiedergegebene Teil des Mikroskopieträgers registriert. Die Mosaikregistrierung erfolgt sequentiell.

In [17] wird ein System zur Digitalisierung von Objektträgern beschrieben, jedoch keine Registrierungsalgorithmik.

In [15] wird eine Methode zur automatischen Erstellung eines virtuellen Mikroskopieträgers beschrieben. Das System erstellt eine Mikroskopieträger, indem jedes Bild automatisch zum Vorhergehenden registriert wird. Aus der Offset-Information wird regelungstechnisch ein Korrekturwert berechnet und die Bühne zur Aufnahme des nächsten Bildes korrigiert verfahren. Mit diesem Verfahren kann auch mittels ungenaueren Bühnen ein relativ genauer virtueller Mikroskopieträger erstellt werden. Die Genauigkeit der Bühne wird also in Betracht gezogen und zwar zur regelungstechnischen Korrektur der Bühne. Die Mosaikregistrierung erfolgt sequentiell.

Es wäre wünschenswert, ein Konzept zur Erzeugung einer Mosaikaufnahme einer Objektebene zu besitzen, das stabiler und damit qualitativ besser funktioniert.

Die Aufgabe der vorliegenden Erfindung besteht deshalb darin, ein solches Konzept zur Erzeugung einer Mosaikaufnahme einer Objektebene zu schaffen, das stabiler und damit qualitativ besser funktioniert.

Diese Aufgabe wird durch eine Vorrichtung gemäß Anspruch 1 und ein Verfahren gemäß Anspruch 12 gelöst.

Ein Kerngedanke der vorliegenden Erfindung besteht darin, erkannt zu haben, dass eine Stabilität und damit auch Qualität der Aufnahme- bzw. Mosaikerzeugung verbessert werden kann, wenn die Vorteile einer globalen Optimierung genutzt werden, aber davon abgegangen wird, die Optimierung vollständig auf Basis einer gegenseitigen Ausrichtung der Bildinformationen allein vorzunehmen, d.h. auf Basis des Ergebnisses einer Ähnlichkeitssuche, sondern wenn statt dessen zusätzlich Informationen über eine Fehlerstatistik des Aufnahmegeräts, das die abschnittsweise Aufnahme der Objektebene übernahm, bei der Positionierung der Teilbilder mit berücksichtigt wird, indem eine Nebenbedingung für die Aufnahmepositionsvariablen in dem Optimierungsproblem aufgestellt wird.

Vorteilhafte Ausgestaltungen der vorliegenden Anmeldung sind Gegenstand der abhängigen Patentansprüche des beigefügten Anspruchsatzes. Bevorzugte Ausführungsbeispiele der vorliegenden Anmeldung werden nachfolgend bezugnehmend auf die beiliegenden Zeichnungen näher erläutert. Es zeigen:

Fig. 1       ein Blockschaltbild einer Vorrichtung zur Mosaikaufnahme einer Objektebene gemäß einem Ausführungsbeispiel;

Fig. 2       ein Flussdiagramm einer Funktionsweise der Vorrichtung von Fig. 1 gemäß einem Ausführungsbeispiel;

Fig. 3a      und 3b schematische Ansichten zur Veranschaulichung der zweidimensionalen Verteilung von Aufnahmepositionen gemäß zweier Ausführungsbeispiele;

Fig. 3c      und 3d schematische Ansichten zur Veranschaulichung alternativer Aufnahmekurse zu demjenigen, der Fig. 3a und 3b exemplarisch zugrundelag;

Fig. 4a      eine schematische Darstellung eines Mosaiks aus Teilbildern, die gemäß Versatzvektoren angeordnet worden sind, die zwischen unmittelbar aufeinanderfolgend aufgenommenen Aufnahmen durch Ähnlichkeitsanalyse ermittelt worden sind;

Fig. 4b      eine schematische Darstellung der Anordnung von Teilbildern gemäß Fig. 4a, allerdings mit Veranschaulichung der Probleme, die auftreten, wenn zusätzlich die weiteren Versatzvektoren zwischen den weiteren Paaren benachbarter Ansichten berücksichtigt werden;

Fig. 5       eine schematische Darstellung einer Anordnung von Teilbildern mit Versatzvektoren, wie sie zwischen benachbarten Ansichten durch Ähnlichkeitsanalyse ermittelt worden sind, und mit Veranschaulichung der Nebenbedingung für Aufnahmepositionsvariablendifferenzen von Paaren unmittelbar aufeinanderfolgend aufgenommener Ansichten gemäß einem Ausführungsbeispiel;

Fig. 6       ein Diagramm, das die Verteilung von Differenzen zwischen den Aufnahmenpositionen unmittelbar aufeinanderfolgend aufgenommener Aufnahmen, wie sie von dem Aufnahmegerät geliefert werden, und den Versatzvektoren zeigt, die für diese Paare durch Ähnlichkeitsanalyse ermittelt worden sind, und die dazugehörigen statistischen Verteilungen in den beiden lateralen Dimensionen zeigt; und

Fig. 7a      und 7b explizite Beispiele für Matrizen A und C innerhalb des quadratischen Optimierungsproblems gemäß einem Ausführungsbeispiel für das Beispiel der Anordnung von Ansichten gemäß Fig. 4a-5.

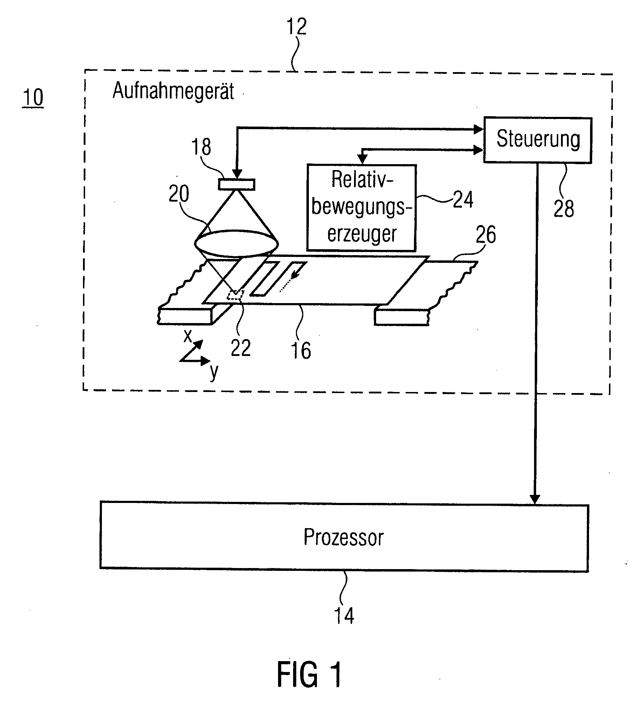

Fig. 1 zeigt eine Vorrichtung zum Erzeugen einer Mosaikaufnahme einer Objektebene gemäß einem Ausführungsbeispiel der vorliegenden Anmeldung, wobei die Vorrichtung allgemein mit 10 angezeigt ist.

Die Vorrichtung 10 umfasst ein Aufnahmegerät 12 und einen Prozessor 14. Das Aufnahmegerät ist ausgebildet, um eine Objektebene 16, wie z.B. einen vorbereiteten Objektträger mit einer Probe, an einer zweidimensionalen Verteilung von Aufnahmepositionen abschnittweise aufzunehmen bzw. abzutasten, um Teilbilder zu erhalten, die Aufnahmen von Abschnitten der Objektebene 16 darstellen, die sich gegenseitig überlappen, und zwar unter Zuordnung der Aufnahmepositionen zu den Teilbildern, wobei das Aufnahmegerät so ausgebildet ist, dass die den Teilbildern zugeordneten Aufnahmepositionen von tatsächlichen Aufnahmepositionen gemäß einer Fehlerstatistik abweichen. Details hierzu werden im Folgenden noch geliefert.

Der Prozessor 14 ist ausgebildet, um Versatzvektoren zwischen Paaren sich gegenseitig überlappender Teilbilder durch Ähnlichkeitsanalyse der sich überlappenden Teilbilder zu ermitteln und ein Optimierungsproblem zur Auffindung eines optimalen Satzes von Aufnahmepositionsvariablen für die Teilbilder zur Minimierung eines Maßes für eine Abweichung zwischen den Versatzvektoren der Paare sich gegenseitig überlappender Teilbilder einerseits und Differenzen der Aufnahmepositionsvariablen der Paare sich gegenseitig überlappender Teilbilder andererseits unter Einhaltung einer Nebenbedingung für die Aufnahmepositionsvariablen zu lösen, die von der Fehlerstatistik abhängt. Details hierzu werden ebenfalls im Folgenden noch geliefert.

Wie es in Fig. 1 gezeigt ist, kann das Aufnahmegerät 12 beispielsweise einen Bildsensor 18, eine Optik 20 zum Abbilden eines Gesichtsfeldausschnitts 22 der Objektebene 16 auf den Bildsensor sowie einen Relativbewegungserzeuger bzw. Motor 24 zum Bewirken einer lateralen Relativbewegung zwischen der Objektebene 16 einerseits und dem Bildsensor 18 und der Optik 20 andererseits aufweisen. Bei dem Aufnahmegerät 12 handelt es sich beispielsweise um eine automatisierte Mikroskopanlage und Bildsensor 18 und Optik 20 können beispielsweise Teil eines Mikroskops sein, wie z.B. eines Auflicht- oder Durchlichtmikroskops. Dementsprechend kann es sich bei der Optik 20 um ein Mikroskopobjektiv handeln. Bei der Objektebene 16 kann es sich, wie im Vorhergehenden bereits erwähnt, um einen Objektträger handeln, auf dem sich eine geeignete Probe, wie z.B. ein Blutaufstrich befindet. Bei dem Relativbewegungserzeuger bzw. Motor 24 kann es sich beispielsweise um einen Verfahrtisch bzw. eine computergesteuerte Bühne handeln, und obwohl es möglich wäre, die Anordnung aus Bildsensor 18 und Objektiv 20 gegenüber der Objektebene 16 zu bewegen, wird es bevorzugt, wenn der Relativbewegungserzeuger die Objektebene 16 relativ zu der Anordnung aus Bildsensor 18 und Optik 20 bewegt, wie es mit einer Halterung 26 angedeutet wird, die die Objektebene 16 bzw. den Objektträger hält und beispielsweise Teil der vorerwähnten Bühne ist.

Wie es zu sehen ist, ist der Relativbewegungserzeuger 24 in der Lage, eine laterale Relativbewegung in zwei lateralen Dimensionen x und y zu erzeugen.

Wie es ferner in Fig. 1 gezeigt ist, kann das Aufnahmegerät 12 auch eine Steuerung 28 zum Steuern des Relativbewegungserzeugers 24 und des Bildsensors 18 aufweisen, nämlich derart, dass die Objektebene 16 an der vorerwähnten zweidimensionalen Verteilung von Aufnahmepunkten aufgenommen wird. Die Steuerung 28 ist ferner dazu ausgebildet, die an der zweidimensionalen Verteilung von Aufnahmepunkten erhaltenen Teilbilder zusammen mit den zugeordneten Aufnahmepositionen an den Prozessor 14 weiterzugeben, der diese Informationen geeignet verarbeitet, wie es im Folgenden noch beschrieben werden wird. Es wird allerdings darauf hingewiesen, dass die Steuerung 28 und der Prozessor 14 auch gemeinsam auf einem Computer implementiert sein können, wie z.B. in Form eines gemeinsamen Programms oder getrennter Programme, die auf einem Computer ablaufen. Andere Möglichkeiten existieren aber auch. So könnte die Steuerung 28 des Aufnahmegeräts 12 eine eigene CPU verwenden, in einem FPGA oder in Hardware, wie z.B. in einem ASIC, realisiert sein, und der Prozessor 14 könnte wiederum eine eigene CPU aufweisen, auf dem ein geeignetes Programm abläuft, oder als FPGA implementiert sein oder dergleichen, wobei der Prozessor 14 dann das Ergebnis der Verarbeitung, nämlich die Mosaikaufnahme, in geeigneter Form ausgibt, wie z.B. in Form einer Speicherung auf einem Datenträger, wie z.B. die Teilbilder zusammen mit dem in der Verarbeitung ermittelten optimierten Satz von Aufnahmepositionen, und/oder durch Anzeige der zusammengesetzten Mosaikaufnahme auf einen Bildschirm und/oder durch Abspeicherung der zu einem Gesamtbild verschmolzenen Einzelaufnahmen gemäß dem optimierten Satz von Aufnahmepositionen.

Um ein konkreteres Beispiel zu geben, kann es sich beispielsweise bei dem Aufnahmegerät 12 um ein vollständig automatisiertes Mikroskopiesystem handeln, das beispielsweise ein Leica DM6000B Mikroskop mit einer z-Achse als die Optik 20, eine verfahrbare Bühne von Ludl Electronic Products als den Relativbewegungserzeuger 24 und eine Farbkamera als Bildsensor 18 umfasst, wobei die Farbkamera beispielsweise ein Modell Pike von Allied Vision Technologies sein kann. Bei der vorerwähnten Probe auf einem Objektträger kann es sich beispielsweise um solche handeln, die cytometrisch und histologisch untersucht werden sollen. Hierzu können die Teilbilder, die von dem Aufnahmegerät 12 aufgenommen werden, beispielsweise mit einer Optik 20 aufgenommen werden, die eine 20-fache Vergrößerung liefert. Für Blutaufstrich-Objektträger könnte das Aufnahmegerät 12 beispielsweise eine Abtastung mit einer 10-fachen Vergrößerung durchführen. Das Aufnahmegerät 12 kann beispielweise einen manuellen oder automatisierten Wechsel zwischen verschiedenen Objektiven als Optik 20 zulassen. Die Kamera erzeugt beispielsweise 1000 x 1000-Pixel-Teilbilder mit einem CCD-Chip von beispielsweise 10,5 mm Bilddiagonale und einer effektiven CCD-Zellengröße von 7,4 x 7,4 $\mu m^2$. Dies ergibt für die 10-fache Vergrößerung eine Abdeckung des aufzunehmenden Bereichs von 0,74 x 0,74 $\mu m^2$ pro Pixel und 0,37 x 0,37 $\mu m^2$ pro Pixel für die 20-fache Vergrößerung. Das Aufnahmegerät 12 kann so kalibriert sein, dass eine genaue Umrechnung zwischen Pixelkoordinaten der Kamera und Hardwarekoordinaten des Relativbewegungserzeugers 24 existiert. Letzterer kann beispielsweise eine Auflösung von 0,4 $\mu$m, eine Wiederholbarkeit von 2,0 $\mu$m und eine Genauigkeit von 10,0 $\mu$m aufweisen. Bei solchen exemplarischen Werten für die Relativbewegungspräzision ist es offensichtlich, dass die Ausrichtung der Teilbilder zueinander nicht allein auf Basis der mechanischen Genauigkeit des Relativbewegungserzeugers 24 bzw. den den Teilbildern durch das Aufnahmegerät 12 zugeordneten Aufnahmepositionen durchgeführt werden kann.

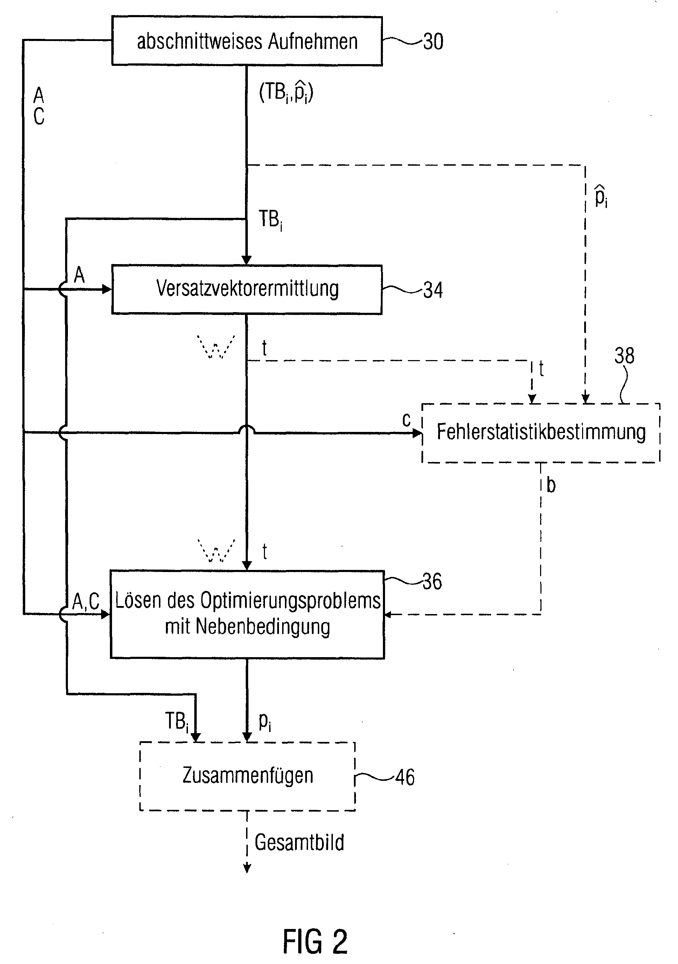

Nachdem im Vorhergehenden der Aufbau der Vorrichtung von Fig. 1 beschrieben worden ist, wird im Folgenden dessen Funktionsweise gemäß einem Ausführungsbeispiel anhand von Fig. 2 beschrieben.

Fig. 2 zeigt den Ablauf bei der Erzeugung einer Mosaikaufnahme. Wie es in Fig. 2 gezeigt ist, beginnt das Verfahren mit einem Schritt 30 des abschnittweisen Aufnehmens der Objektebene 16 durch das Aufnahmegerät 12. Wie es im Folgenden noch näher erörtert werden wird, ist das Aufnahmegerät 12 beispielsweise so ausgebildet, dass die vorher erwähnte zweidimensionale Verteilung von Aufnahmepositionen sequentiell in einem Aufnahmekurs durchlaufen wird. In anderen Worten ausgedrückt, scannt das Aufnahmegerät 12 die Objektebene 16 bzw. tastet sie sequentiell ab, um die Teilbilder an den Aufnahmepositionen zu erhalten. Gemäß nachfolgend beschriebenen Ausführungsbeispielen wird die Objektebene unter Verwendung eines meanderförmigen Aufnahmekurses bzw. Zick-Zack-Kurses abgetastet, wonach abwechselnd eine Relativbewegung von links nach rechts, rechts nach links und oben nach unten bzw. allgemein ausgedrückt, entlang einer Hin-Richtung, Her-Richtung und Vorrückrichtung stattfindet. Die Aufnahme der Teilbilder kann beispielsweise mit einem gegenseitigen Überlapp von 20 % zwischen benachbarten Bildern der Bildgröße durchgeführt werden. Demgemäß besteht also schon bereits eine Schätzung dafür, wo sich jedes Teilbild in der virtuellen Gesamtaufnahme befindet, und wie sich die Teilbilder gegenseitig überlappen.

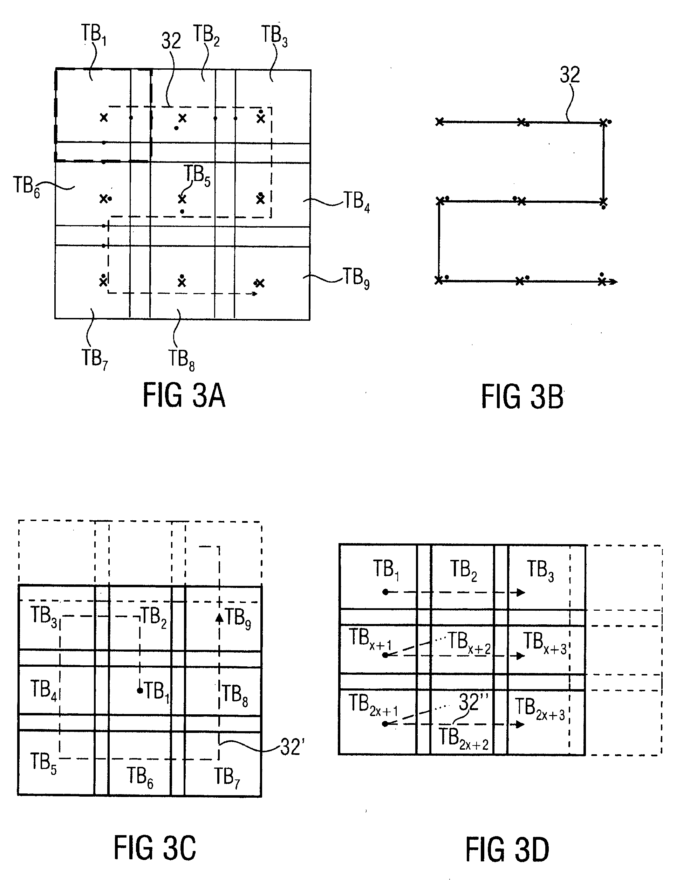

Um dies zu veranschaulichen, sei auf Fig. 3a Bezug genommen. Fig. 3a zeigt einen Ausschnitt aus einer Objektebene, die in Schritt 30 exemplarisch in einer regelmäßigen Verteilung von neun Teilbildern $TB_1$ bis $TB_9$ abgetastet bzw. gescannt worden ist. Exemplarisch ist mit einer gestrichelten Linie 32 ein Beispiel für einen Aufnahmekurs angedeutet, wobei dieser Kurs meanderförmig verläuft, wobei aber natürlich auch andere Verläufe möglich wären. Die Aufnahmepositionen der Teilbilder $TB_1$ bis $TB_9$ sind mit Kreuzchen in Fig. 3a angezeigt. Sie bilden ein regelmäßiges 3 x 3-Gitter, sind also in Zeilen und Spalten angeordnet. Die Aufnahmepositionen der Teilbilder $TB_1$ - $TB_3$ und die Teilbilder $TB_1$ bis $TB_3$ selbst liegen somit in einer Zeile und die Teilbilder $TB_2$, $TB_5$ und $TB_9$ und ihre Aufnahmepositionen liegen somit exemplarisch in einer Spalte. Aber auch diese Anordnung der Aufnahmepositionen ist lediglich exemplarisch, und die nachfolgenden Ausführungsbeispiele können problemfrei auch auf andere Verteilungen von Aufnahmepositionen übertragen werden.

Um den Überlapp der Teilbilder $TB_1$ - $TB_9$ etwas deutlicher zu machen, ist der Umriss des Teilbildes $TB_1$ mit etwas dickeren gestrichelten Linien hervorgehoben. Die Aufnahmepositionen sind, wie im Vorhergehenden bereits erwähnt, so angeordnet, dass sich benachbarte Teilbilder überlappen, und zwar sowohl in Zeilen- als auch in Spaltenrichtung sowie diagonal. Diagonale Überlappungen werden im Folgenden vernachlässigt, könnten aber ebenfalls berücksichtigt werden. Insgesamt existieren auf diese Art und Weise zwölf unterschiedliche Paare benachbarte Teilbilder. Ein Teil, nämlich hier exemplarisch acht Paare, davon sind nicht nur in der zweidimensionalen Anordnung zueinander benachbart, sondern folgen auch entlang des Aufnahmekurses 32 bzw. in der Aufnahmereihenfolge unmittelbar aufeinander.

Fig. 3a zeigt somit, dass bereits die Planung der abschnittsweisen Aufnahme in Schritt 30 im Vorhinein einiges Wissen über die Lage der Teilbilder $TB_1$ - $TB_9$ zueinander liefert. Würden die Teilbilder $TB_1$ - $TB_9$ tatsächlich an den Positionen, die in Fig. 3a mit Kreuzchen angezeigt sind, aufgenommen worden sein, wäre die Mosaikaufnahme bereits fertig. Allerdings besitzt, wie im Vorhergehenden bereits erwähnt, das Aufnahmegerät 12 eine Fehlerstatistik, wonach die den Teilbildern zugeordneten Aufnahmepositionen von tatsächlichen Aufnahmepositionen abweichen. Diese tatsächlichen Aufnahmepositionen sind in Fig. 3a lediglich der Veranschaulichung halber mit Punkten angezeigt, die sich jeweils in der Nähe eines Kreuzchens befinden, aber eben von letzteren abweichen. Letztere tatsächliche Aufnahmepositionen sind natürlich nicht bekannt, und es ist Sinn und Zweck der Verarbeitung im Prozessor 14 und der nachfolgenden Schritte in dem Verfahren von Fig. 2, eine gute Schätzung und bestenfalls genau die tatsächlichen Aufnahmepositionen zu ermitteln.

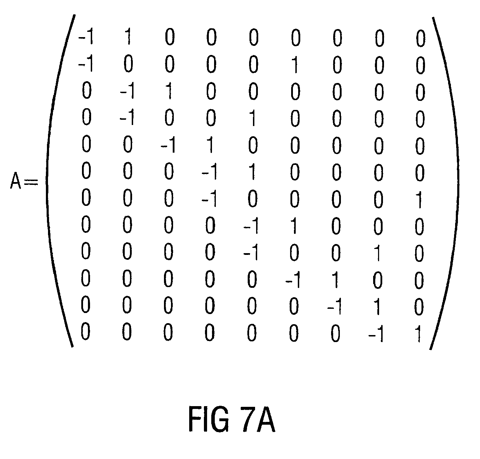

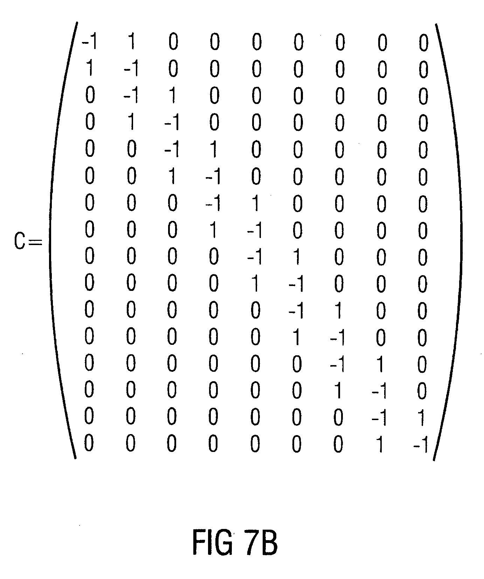

Es sei also nochmals festgehalten, dass bereits die Planung des abschnittsweisen Aufnehmens 30 im Vorfeld darüber Aufschluss gibt, wie viele Teilbilder entstehen werden, welche dieser Teilbilder zueinander benachbart sind, und welche der benachbarten Teilbildpaare unmittelbar hintereinander aufgenommen wurden. In Fig. 2 ist deshalb angedeutet, dass aus dem Schritt 30 nicht nur die Teilbilder $TB_i$ mit ihren zugehörigen vermeintlichen Aufnahmepositionen $\hat{p}_i$ entstehen, sondern auch Informationen, die die Nachbarschaftsinformationen beinhalten, wofür in Fig. 2 symbolhaft die Buchstaben A und C verwendet worden sind, welche Matrizen darstellen, die später beim Optimierungsproblem verwendet werden, und wofür die Fig. 7a und 7b exemplarisch Beispiele liefern, wie die Matrizen A und C in diesem Optimierungsproblem aussähen, wenn sie für die Aufnahmeplanung gemäß Fig. 3a erstellt werden würden. In Fig. 7a ist beispielsweise zu sehen, dass die Matrix A neun Spalten aufweist, nämlich eine Spalte pro Teilbild $TB_i$, wobei i gleichzeitig auch die Spaltenadresse angibt. Wie es zu sehen ist, existieren in der Matrix A 12 Zeilen, wovon jede Zeile außer Nullen lediglich eine -1 und eine 1 aufweist, und zwar genau für Teilbilder, die zueinander benachbart sind. Die erste Zeile aus der Matrix A von Fig. 7a zeigt somit an, dass die Teilbilder $TB_1$ und $TB_2$ zueinander benachbart sind, und die zweite Zeile gibt an, dass die Teilbilder $TB_1$ und $TB_6$ zueinander benachbart sind, wie es auch in Fig. 3a zu sehen ist. Auf ähnliche Weise besitzt auch die Matrix C von Fig. 7b neun Spalten für die Teilbilder $TB_i$, wobei wiederum i auch der Spaltenadresse bzw. Spaltennummer von links nach rechts entspricht. Die Matrix C weist 16 Zeilen auf, nämlich 2 x 8 Zeilen, nämlich für jedes Paar benachbarter Teilbilder, die auch unmittelbar aufeinanderfolgend aufgenommen worden sind, d.h. für jedes entlang des Aufnahmekurses 32 unmittelbar benachbarte Paar von Teilbildern. Für jedes solche Paar besitzt die Matrix C zwei Zeilen, in denen außer Nullen an den entsprechenden Positionen jeweils eine 1 und eine -1 und umgekehrt angeordnet sind. Die Bedeutung der Matrizen A und C wird aus der folgenden Erörterung des Optimierungsproblems noch deutlicher werden. An dieser Stelle sollte lediglich auch auf das aus der Aufnahmeplanung bereits bekannte Wissen über die Nachbarschaftsbeziehungen hingewiesen werden.

Wie also soeben erwähnt, kann das abschnittsweise Aufnahmen 30 eine vorhergehende Planung der abschnittsweisen Aufnahmen, wie z.B. die Auswahl der Aufnahmepositionen und der zugehörigen Vergrößerung bzw. die Größe der Gesichtsfelder der Teilbilder usw. aufweisen. So wäre es möglich, dass die Steuerung 28 dem Relativbewegungserzeuger 24 die Sollaufnahmepositionen von Fig. 3a vorgibt, und diese Sollaufnahmepositionen als die vorerwähnten Aufnahmepositionen den Teilbildern $TB_i$ zuordnet und den Bildsensor 18 auf ein Bestätigungssignal zur Bestätigung des Erreichens der Sollposition durch den Relativbewegungserzeuger 24 hin anweist, ein jeweiliges Teilbild $TB_i$ zu erzeugen, wobei der Relativbewegungserzeuger 24 seinerseits wiederum ausgebildet sein könnte, um eine relative laterale Lage zwischen der Objektebene 16 einerseits und dem Bildsensor 18 und der Optik 20 andererseits so lange zu regeln, bis die Sollaufnahmepositionen vermeintlich erreicht sind, um dann jeweils das Bestätigungssignal an die Steuerung 28 zu senden.

Der Zusammenhang zwischen Planung einerseits und den den Teilbildern durch das Aufnahmegerät 12 zugeordneten Aufnahmepositionen andererseits kann aber auch ein wenig aufgelockert werden. Fig. 3b veranschaulicht beispielsweise eine Möglichkeit, wonach die Steuerung 28 ausgebildet ist, um dem Relativbewegungserzeuger 24 lediglich den Aufnahmekurs 32 vorzugeben und an vorbestimmten Aufnahmezeitpunkten, die bei idealer bzw. zu erwartender Funktionsweise des Relativbewegungserzeugers 24 beispielsweise zu den Sollpositionen gemäß Fig. 3a führen würden, den Bildsensor 18 anzuweisen, ein jeweiliges Teilbild $TB_i$ zu erzeugen, und den Relativbewegungserzeuger 24 anzuweisen, eine momentane Relativlageposition zu dem jeweiligen Aufnahmezeitpunkt zu erfassen, die dann als Aufnahmeposition dem zu dem jeweiligen Aufnahmezeitpunkt erzeugten Teilbild $TB_i$ zugeordnet wird. Der Relativbewegungserzeuger 24 würde in diesem Fall seinerseits die Relativlageposition zwischen der Objektebene 16 einerseits und dem Bildsensor 18 und der Optik 20 andererseits gemäß dem vorgegebenen Aufnahmekurs 32 verändern und auf die Anweisung von der Steuerung 28 hin, wie angewiesen, die momentane Relativlageposition erfassen. Wie es in Fig. 3b gezeigt ist, lägen in diesem Fall die den Detailbildern zugeordneten, auch in Fig. 3b mit Kreuzchen angezeigten, von dem Aufnahmegerät 12 an den Prozessor 14 weitergeleiteten Aufnahmepositionen nicht ganz so strikt in dem regelmäßigen Raster, wie es in Fig. 3a der Fall war, wenngleich die Abweichung nicht groß ist. Allerdings existiert auch in dem Fall von Fig. 3b eine Fehlerstatistik bezogen auf die Abweichung zwischen den von dem Relativbewegungserzeuger 24 gelieferten Positionen einerseits und den tatsächlichen Aufnahmepositionen andererseits, welcher letztere in Fig. 3b mit Punkten ebenfalls angezeigt sind.

Der Vollständigkeit halber zeigen vor einer weiteren Beschreibung des Verfahrens nach Fig. 2 die Fig. 3c und 3d Alternativen zu dem meanderförmigen Aufnahmekurs, wie er nachfolgenden Ausführungsbeispielen exemplarisch zugrundeliegt. Fig. 3c zeigt beispielsweise einen kreisförmig von einem Mittelpunkt der Mosaikaufnahme bzw. von einem mittleren Teilbild $TB_1$ aus der Anordnung von Teilbildern ausgehenden Aufnahmekurs 32' und Fig. 3d einen zeilenweise immer wieder am linken Rand der Teilbilderanordnung neu anfangenden, die Teilbilder zeilenweise von der obersten zur untersten Zeile scannenden Aufnahmekurs 32".

Dem Schritt 30 folgt, wie es in Fig. 2 gezeigt ist, ein Schritt 34 der Ermittlung von Versatzvektoren zwischen Paaren sich gegenseitig überlappender Teilbilder durch Ähnlichkeitsanalyse und der sich überlappenden Teilbilder. Die Ähnlichkeitsanalyse in Schritt 34 ist, in anderen Worten ausgedrückt, eine Suche nach einem Versatzvektor zwischen Paaren benachbarter Teilbilder binnen eines vorbestimmten Suchraumes von möglichen Versatzvektoren, der zu einer maximalen Ähnlichkeit zwischen diesen beiden Teilbildern im Überlappungsbereich derselben führt, wie z.B. im Fehlerquadratsinne oder dergleichen, wobei die Suche, beispielsweise durch Kreuzkorrelation durchgeführt werden kann oder unter Verwendung der Fouriertransformierten davon, nämlich der Kreuzleistungsdichte bzw. dem Kreuzleistungsspektrum oder dergleichen. Der vorerwähnte Suchraum kann die Suche unter Versatzvektoren ausschließen, die statistisch einfach nicht zu erwarten sind. Allerdings ist es ebenfall möglich, die Ähnlichkeitssuche über alle Versatzvektoren durchzuführen, wie z. B. die Kreuzkorrelation der Teilbilder vollständig zu berechnen. Es können eine flächenbasierte SSD- oder Kreuzkorrelation oder eine Kleinste-Quadrate Korrelation sowie merkmalsbasierte Maße zum Einsatz. Der genaue Positionierungsoffset bzw. die Transformation zwischen zwei Bildern kann bestimmt werden, indem die Position bestimmt wird, in der ein entsprechendes Ähnlichkeitsmaß im Überlappbereich sein Maximum erreicht.

Bevorzugt wird die invers transformierte Kreuzleistungsdichte mit der Foroosh et al Erweiterung [10] für Subpixelgenauigkeit zur Bestimmung der Transformation bzw. des Versatzvektors zwischen überlappenden Teilbildern verwendet. Es lässt sich zeigen, dass die Kreuzkorrelation die optimale statistische Schätzfunktion unter der Annahme der translatorischen Versetzung unter den Teilbildern, wie sie vorliegenden Ausführungsbeispielen zugrunde liegt, und rein additiven weißen gaussförmigen Rauschens [11] ist. Für den Fall der normierten Kreuz-Leistungsdichte lässt sich dies analytisch nicht zeigen. Jedoch weist im Gegensatz zu der Kreuzkorrelation die invers transformierte normierte Kreuzleistungsdichte den Vorteil auf, dass die Korrelationsenergie komplett an einem Punkt konzentriert ist oder, in dem Fall eines Subpixelversatzes, in der direkten Nachbarschaft des Peaks. Die Einfachheit und Sicherheit der Erfassung dieses Punktes macht die invers transformierte normierte Kreuzleistungsdichte zu einem sehr attraktiven Verfahren für den Schritt 34. Zusätzlich gibt dieses Verfahren die Möglichkeit zur Bestimmung einer Messung der Qualität des jeweiligen bestimmten Versatzvektors. In anderen Worten ausgedrückt, kann Schritt 34 auch den Schritt der Bestimmung eines Maßes für eine Ähnlichkeit der Teilbilder, die zueinander mit dem ermittelten Versatzvektor zueinander versetzt worden sind, im Überlappungsbereich umfassen. Zwei Bilder, die perfekt zueinander passen und nicht durch Rauschen oder dergleichen beschädigt sind, ergäben beispielsweise einen Korrelationswert von 1 als dem Peakkorrelationswert. Folglich würden kleinere Korrelationswerte einen Hinweis darauf darstellen, dass die resultieren Versatzwerte bzw. ermittelten Versatzwerte weniger zuverlässig sind. Dabei ist darauf hinzuweisen, dass in der Lichtmikroskopie der Bereich, wo kein Informationsinhalt bzw. kein Objekt verfügbar ist, immer weiß ist, da das Licht ungehindert durch den Objektträger 16 und die Optik 20 zu dem Detektor 18 dringen kann. Dies bedeutet, dass bei der Ähnlichkeitssuche zwischen zwei Teilbildern, die in einem Bereich des Objektträgers mit keinem Informationsinhalt aufgenommen wurden, ein korrelatives Vorgehen bei der Ähnlichkeitsanalyse in einem Korrelationswert nahe dem Maximum von 1 beinahe kontinuierlich über den Suchraum hinwegführen würde. Um dieses Problem zu vermeiden, wird vorzugsweise bei Schritt 34 jedes Teilbild vor der Korrelation invertiert.

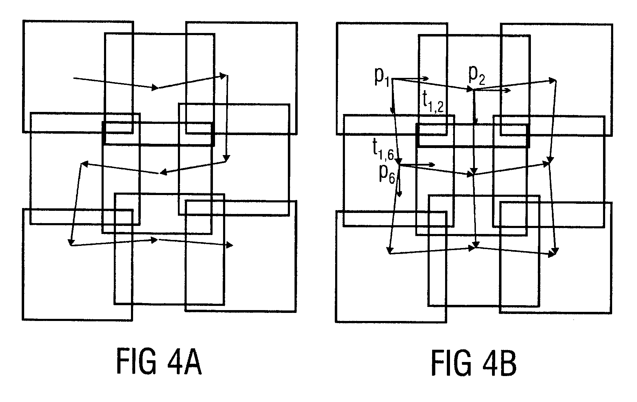

Wie soeben erwähnt, wird der Schritt 34 der Versatzvektorermittlung für alle Paare benachbarter Teilbilder durchgeführt. Insbesondere wird beispielsweise in Schritt 34 für jedes Teilbild ausgenommen den Teilbildern entlang des rechten und unteren Randes der gesamten Anordnung von Teilbildern der Versatzvektor zu seinem rechten und seinem unteren Nachbar bestimmt, wie es in Fig. 4b gezeigt ist. Wenn alle Ähnlichkeitsanalysen in Schritt 34 für jedes Paar benachbarter Teilbilder zu dem tatsächlich richtigen Ergebnis führte, dann träfen sich die Versatzvektoren $t_{ij}$ tatsächlich alle in einem Punkt, egal von welchem Teilbild man ausgeht und unabhängig davon, welchen Weg man bis zu einem anderen Teilbild über Versatzvektoren geht.

Es sei übrigens darauf hingewiesen, dass in Fig. 4b die Positionen der Teilbilder $TB_i$ mit $p_i$ angegeben sind, d.h. nicht mit $\hat{p}_i$, weil ja aufgrund der Fehlerstatistik, mit der die Erfassung der Positionen $\hat{p}_i$ behaftet ist, die Neuermittlung über das Lösen eines Optimierungsproblems, wie es in nachfolgender Beschreibung von Fig. 2 noch deutlich werden wird, notwendig ist. Die Vektoren $\mathbf{p}_i$ geben somit die noch zu suchenden Schätzungen für die tatsächlichen Positionen der Teilbilder $TB_i$ an.

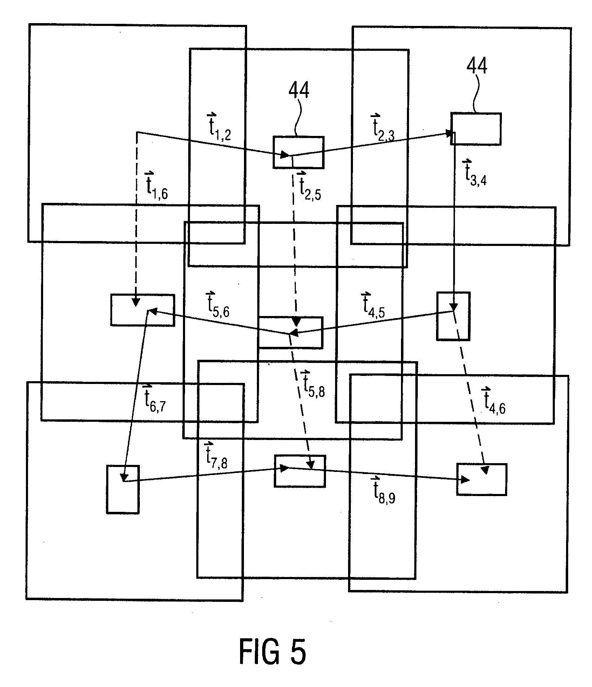

Fig. 4a zeigt den Teilsatz von Versatzvektoren, der zwischen dem Teilsatz von Paaren benachbarter Teilbilder $TB_i$ bestimmt worden ist, die in Aufnahmekurs-Richtung unmittelbar nacheinander aufgenommen worden sind. Es handelt sich, wie im Vorhergehenden erwähnt, bei dem exemplarischen Beispiel mit neun Teilbildern, die in einer 3 x 3 Anordnung aufgenommen worden sind, um acht Paare. Doppeldeutigkeiten bei der globalen Positionierung der Teilbilder ergeben sich nicht, wenn nur diese Versatzvektoren von Fig. 4a verwendet werden. Allerdings ergeben sich eben Fehler aufgrund von fehlermittelten Versatzvektoren aus Schritt 34. Fig. 5 zeigt exemplarisch die hinzukommenden Versatzvektoren von Paaren von benachbarten, sich überlappenden Teilbildern, die nicht entlang des Aufnahmekurses überlappen. Sie sind in Fig. 5 mit gestrichelten Linien dargestellt und fußen zwar an den End- und Fußpunkten der Versatzvektoren der Paare von Teilbildern, die in Aufnahmekursrichtung unmittelbar aufeinander folgen, aber enden nicht an einem der End- und/oder Fußpunkte dieser mit durchgezogenem Linien dargestellten Versatzvektoren. Ziel des nachfolgend noch beschriebenen Optimierungsproblems ist es somit, optimale Positionen $\mathbf{p}_i$ der Teilbilder $TB_i$ so zu finden, dass trotz der Fehlermittlungen bei den Versatzvektoren die korrekten tatsächlichen Positionen der Teilbilder $TB_i$ zueinander gefunden bzw. geschätzt werden.

Fig. 4a zeigt somit vergleichsweise auch ein Schema eines fortlaufenden Ausrichtungsprozesses, bei dem nur die Transformationsparameter von dem direkten Vorgänger berücksichtigt werden. Bei einem globalen Optimierungsschema, wie es gemäß vorliegendem Ausführungsbeispiel vorgestellt wird, werden alle Transformationsparameter von den benachbarten Bildern berücksichtigt, wie es bei Fig. 4b dargestellt ist. Außerdem sind bei Fig. 4b drei Bilder mit ihren Bildkoordinatensystemen und ihrer globalen Positionierung $p_i$ markiert. Die zwei Translationsvektoren $t_{i,j}$, die diese Bilder in dem Koordinatenraum voneinander umwandeln, sind ebenfalls markiert. Fig. 5 zeigt ein Schema einer Abtastung von 3 x 3 Gesichtsfeldern bzw. Teilbildern. Die Pfeile markieren die Transformationen, die durch die Ähnlichkeitsanalyse, wie z.B. das normierte Kreuzleistungsspektrum, erhalten werden, wobei die durchgehenden Pfeile zusätzlich die Reihenfolge der aufeinanderfolgenden mäanderförmigen Abtastung zeigen, die durch den Relativbewegungserzeuger 24 bewirkt wird. Die Rechtecke visualisieren die Grenzen, in denen jedes Gesichtsfeld später bei der Optimierung bezüglich seines direkten Vorgängers in der Abtastreihenfolge neu angeordnet werden kann, worauf im folgenden noch im Rahmen der Optimierungsnebenbedingung eingegangen wird, aus welcher nachfolgenden Beschreibung auch der Grund für die drei unterschiedlichen Größen der Rechtecke hervorgehen wird, die die drei unterschiedlichen rechteckigen Grenzen für die Abtastreihenfolge rechts nach links, links nach rechts und oben nach unten markieren.

Eine globale Positionierung $\mathbf{p}_j$ des Teilbildes $TB_j$ kann nun also dadurch berechnet werden, dass zuerst die Positionierung des benachbarten Teilbildes, nämlich $\mathbf{p}_i$ des Teilbildes $TB_i$ berechnet wird und dann der Versatzvektor $\mathbf{t}_{ij}$ angewendet wird, um das Teilbild $TB_i$ räumlich gegenüber dem Teilbild $TB_j$ anzuordnen:

Gleichung 1:

$$\mathbf{p}_j = \mathbf{p}_i + \mathbf{t}_{i,j} \rightarrow \mathbf{p}_j - \mathbf{p}_i = \mathbf{t}_{i,j} \text{ with } 1 \leq i, j \leq N$$

Falls das Bild $TB_1$ auf den Ursprung des Koordinatensystems des virtuellen Objektträgers eingestellt wird und wenn alle Versatzvektoren berücksichtigt werden, ist es möglich, ein dünn besetztes lineares Gleichungssystem aufzustellen, bei dem die Versatzvektoren $\mathbf{t}_{ij}$ die bekannten Teile der Gleichungen darstellen:

Gleichung 2:

$$\mathbf{A} \begin{bmatrix} \mathbf{p}_1 \\ \dots \\ \mathbf{p}_N \end{bmatrix} = \begin{bmatrix} \mathbf{t}_{1,2} \\ \dots \\ \mathbf{t}_{N,N-1} \end{bmatrix} \rightarrow \mathbf{Ap} = \mathbf{t}.$$

Da aber, wie im Vorhergehenden bezugnehmend auf Fig. 5 veranschaulicht, jedes Teilbild in einer vierfach verbundenen Nachbarschaft zwei oder mehr Nachbarn aufweist, ist dieses System überbestimmt. In Schritt 36 wird deshalb das System in einem Optimierungssinne, wie z.B. in einem kleinsten Fehlerquadratsinne, gelöst. Insbesondere umfasst der Schritt 36 das Lösen eines Optimierungsproblems zur Auffindung eines optimalen Satzes von Aufnahmepositionsvariablen $\mathbf{p}_i$ für Teilbilder $TB_i$ zur Minimierung eines Maßes für eine Abweichung zwischen den Versatzvektoren $\mathbf{t}_{i,j}$ der Paare sich gegenseitig überlappender Teilbilder einerseits und Differenzen der Aufnahmepositionsvariablen $\mathbf{p}_i$ - $\mathbf{p}$ der Paare sich gegenseitig überlappender Teilbilder andererseits unter Einhaltung einer Nebenbedingung für die Aufnahmepositionsvariablen, die von der Fehlerstatistik abhängt. Dementsprechend ist die Matrix $\mathbf{A}$ aus Gleichung 2 so beschaffen, dass sie die Aufnahmepositionsvariablen $\mathbf{p}_i$ so paarweise miteinander kombiniert, dass der jeweilige Versatzvektor mit der jeweiligen Aufnahmepositionsvariablendifferenz in Beziehung gebracht wird.

Es wird darauf hingewiesen, dass in Gleichung 2 der Vektor t genau genommen nicht nur 12 Komponenten aufweist, wie es Fig. 7a bzw. die Tatsache anzeigen könnte, dass 12 Versatzvektoren für das Beispiel von Fig. 5 existieren, sondern dass der Vektor t in Wirklichkeit eigentlich 24, d.h. doppelt so viele Komponenten wie Versatzvektoren, aufweist, nämlich für jeden Versatzvektor die Komponente des jeweiligen Versatzvektors in der x-Richtung und in der y-Richtung. Entsprechendes gilt für den Vektor $\mathbf{p}$ in Gleichung 2 und bezüglich Fig. 7a wird darauf hingewiesen, dass streng genommen jeder Komponenteneintrag in Fig. 7a einen entsprechenden 2-er Vektor mit zwei gleichen Komponenteneinträgen darstellt, nämlich der entsprechenden Zahl, die an der entsprechenden Stelle in der Matrix $\mathbf{A}$ steht.

Die Einhaltung der Nebenbedingung kann gemäß Gleichung 7, die im Folgenden noch erörtert werden wird, formuliert werden. Im Folgenden wird eine spezielle Art der Ermittlung der Nebenbedingung aus der Fehlerstatistik beschrieben, aber andere Möglichkeiten existieren daneben ebenfalls; wie im Anschluss an die Figurenbeschreibung noch erwähnt werden wird.

Um den Optimierungsansatz, wie z.B. den Kleinste-Fehler-Quadrate-Lösungsansatz, stabiler gegenüber den Versatzvektorfehlerermittlungen in Schritt 34 zu machen, wird es bevorzugt, jede Gleichung mit einem Maß für die Ähnlichkeit der Teilbilder $TB_i$ und $TB_j$ im Überlappungsbereich gemäß ihrem jeweils zugeordneten ermittelten Versatzvektor $\mathbf{t}_{ij}$, wie z.B. dem vorher erwähnten Peakkorrelationswert der Transformation, zu ermitteln. Dies ergibt eine Diagonalgewichtungsmatrix $\mathbf{W}$ mit dem dazu korrespondierenden gewichteten Kleinste-Quadrate-Problem:

Gleichung 3:

$$\arg\min_{\boldsymbol{p}} \left( \left\| \boldsymbol{W}(\boldsymbol{Ap} - \boldsymbol{t}) \right\|^2 \right)$$

Beispielsweise werden Versatzvektoren, die einen Korrelationswert von kleiner als 0,15 ergeben, mit 0 gewichtet. Der entsprechende Diagonaleintrag in der Matrix **W** ist folglich Null.

Dies hätte zur Folge, dass unzuverlässige Versatzvektorermittlungen nicht in Betracht gezogen werden würden, und somit das Optimierungsergebnis nicht negativ beeinflussen würden. Der Schwellwert von 0,15 ist dabei lediglich ein bevorzugtes Ausführungsbeispiel, und andere Werte sind natürlich ebenfalls möglich. Die Positionsgenauigkeit des Aufnahmegerätes 12 ist natürlich nicht nur von der mechanischen- und Steuerungsgenauigkeit des Relativbewegungserzeugers 24, wie z.B. dem Verfahrtisch, abhängig, sondern auch von der Genauigkeit der zur Kalibrierung des Relativbewegungserzeugers 24 verwendeten Kalibrierschemas. Beispielsweise können richtungsabhängige Versatzfehlwerte bei der Bestimmung der Aufnahmepositionen $\hat{p}_i$ aufgrund von Fehlkalibration oder Rundungsfehlern entstehen. Wird, wie es im Vorhergehenden beschrieben wird, exemplarisch ein meanderförmiger Aufnahmekurs 32 zum Scannen der Objektebene 16 verwendet, gibt es drei unterschiedliche Richtungen, wie z.B. von Links nach Rechts, von Rechts nach Links und von Oben nach Unten, die separat hinsichtlich der Fehlerstatistik analysiert werden können und gemäß den nachfolgend beschriebenen Ausführungsbeispiel auch separat analysiert werden. Da der Verfahrtisch gemäß dem Ausführungsbeispiel von Fig. 3a immer um den gleichen Abstand für jede der drei genannten Richtungen verfahren wird, sollte der kalibrierungsabhängige Fehlversatz in der jeweiligen Richtung konstant sein.

Gemäß dem Ausführungsbeispiel von Fig. 2 ist es nun vorgesehen, dass basierend auf dem Ergebnis der abschnittsweisen Aufnahme aus Schritt 30 die Fehlerstatistik des Aufnahmegeräts 12 in Schritt 38 bestimmt wird. Wie es aber mit der Verwendung gestrichelter Linien angedeutet ist, ist diese Bestimmung auf Basis der Aufnahmen der zueinander auszurichtenden Teilbilder selbst nicht zwingend notwendig. Die Fehlerstatistikermittlung könnte auch auf Basis einer vorab durchgeführten Kalibrierung für das Gerät 12 durchgeführt werden, woraufhin dann die so ermittelte Fehlerstatistik für nachfolgende Optimierungen von Ergebnissen einer abschnittsweisen Aufnahme gemäß Schritt 30 verwendet werden würde. Auch eine solche Vorabbestimmung der Fehlerstatistik könnte so durchgeführt werden, wie es im Folgenden beschrieben wird, nämlich durch abschnittsweises Aufnehmen einer Objektebene, wobei in diesem Kalibrierungsfall allerdings beispielsweise keine echte Probe verwendet werden muss, sondern beispielsweise auch ein geeignetes Kalibrierobjekt abschnittsweise aufgenommen werden könnte.

Insbesondere verwendet die Fehlerstatistikbestimmung 38 die den Teilbildern TB$_i$ zugeordneten Aufnahmepositionen $\hat{p}_i$, wie sie von dem Aufnahmegerät 12 erhalten werden, und zwar zusammen bzw. im Vergleich zu den Versatzvektoren, die in Schritt 34 für diejenigen Paare von Teilbildern ermittelt worden sind, die entlang der Aufnahmekursrichtung miteinander überlappen. Gemäß einem alternativen Ausführungsbeispiel könnten auch andere ermittelte Versatzvektoren bei der Fehlerstatistikbestimmung 38 einfließen, und zwar zusätzlich oder alternativ.

In die Fehlerstatistikbestimmung 38 kann beispielsweise der Fehlerversatzvektor t$_{off}$ zwischen den Versatzvektoren, wie sie sich aus den Ausgaben des Aufnahmegeräts 12 bei Bewegen des Relativbewegungserzeugers 24 in einer bestimmten Richtung ergeben, nämlich $\mathbf{t}_{proj} = \hat{p}_j - \hat{p}_i$, und den erfassten Versatzvektoren $\mathbf{t}_{i,j}$ einfließen:

Gleichung 4:

$$\mathbf{t}_{\text{off}} = \mathbf{t}_{\text{proj}} - \mathbf{t}.$$

Solche Abweichungen ergeben sich also für acht Paare unmittelbar aufeinanderfolgend aufgenommener Teilbilder TB$_j$ und TB$_i$, und zwar jeweils für die laterale Dimension entlang der x-Achse und der y-Achse.

Um eine Messung des kalibrierabhängigen Versatzwertes zu erhalten, könnte als Maß für die zentrale Tendenz der Mittelwert in der x- und y-Richtung von t$_{off}$ für die drei Scanrichtungen des Aufnahmekurses 32 berechnet werden. Obwohl aber die invers transformierte normierte Kreuzleistungsdichte ein sehr zuverlässiger Schätzer für die Versatzwerte $\mathbf{t}_{i,j}$ ist, entstehen bei realen Bedingungen häufig Fehlermittlungen und somit Fehlausrichtungen bzw. Ausreißer in der Verteilung von t$_{off}$. Einem Ausreißer könnte unter Verwendung des Mittelwertes zur Bestimmung der zentralen Tendenz bei weitem zu viel Gewicht verliehen werden. Folglich wird es bevorzugt, ein robusteres Maß für die zentrale Tendenz zu berechnen, nämlich beispielsweise den Median entlang der x-Richtung, d.h. der Median der Verteilung von t$_{off}$ der Differenzen für die Paare von unmittelbar aufeinanderfolgenden Teilbildern in der jeweiligen Scanrichtung, und das gleiche für die y-Komponente in der y-Richtung, was $\tilde{\mu}_{y\text{-off}}$ ergibt. Beide sind ein Schätzer für den kalibrierungsabhängigen Offset. Sie können für jede der drei Richtungen bestimmt werden. Der Median kann beispielsweise dadurch berechnet werden, dass die entsprechende Komponente der beteiligten Vektoren $\mathbf{t}_{off}$ sortiert wird, wie z.B. von Klein zu Groß, und danach der mittlere Wert genommen wird, und das jeweils für die x-Komponente und die y-Komponente, und dann für jede Scanrichtung. Es könnte allerdings auch ein Mittelwerte über eine um statistische Ausreißer bereinigte Population von Fehlerversatzvektor $\mathbf{t}_{off}$ verwendet werden.

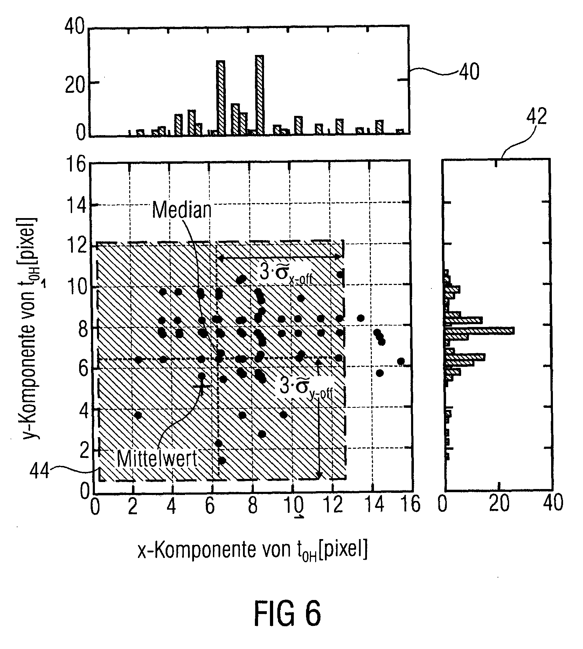

Fig. 6 zeigt beispielsweise einen Plot von Fehlversatzvektoren $\mathbf{t}_{off}$, aufgetragen für einen Scan entlang einer der Scanrichtungen in dem Fall einer größeren Anzahl von Teilbildern, wie sie exemplarisch in Fig. 3a - 5 dargestellt sind. Die Komponentenwerte sind in Einheiten von Pixeln aufgetragen, d.h. gemessen im Abstand eines Pixel zum nächsten in den Teilbildern in der Objektebene. Wie es zu erkennen ist, kommen Fehlversätze zustande, die sich bis auf etwa 16 Pixelwiederholabstände aufsummieren. Fig. 6 lag ein waagrechter Scan zugrunde, weshalb die Streuung der Fehlversatzwerte in x-Richtung größer als in der y-Richtung ist. Seitlich zu dem Plot der Fehlversatzvektoren $\mathbf{t}_{\text{off}}$ ist in Fig. 6 ein Histogramm 40 der Verteilung der x-Komponentenwerte bzw. eine Verteilung 42 der y-Komponentenwerte dargestellt.

Der Streuungsplot von Fig. 6 mit den Histogrammen 40 und 42 visualisiert somit die Fehlerstatistik des bei der abschnittsweisen Aufnahme 30 verwendeten Aufnahmegerätes 12, wie er sich in den Fehlerversatzvektoren $\mathbf{t}_{\text{off}}$ niederschlägt (vgl. Gleichung 4). Insbesondere ist dies in Fig. 6 für einen typischen Scan gezeigt, und zwar exemplarisch für den Fall, wenn der Relativbewegungserzeuger 24 bzw. der Verfahrtisch 24 sich von Links nach Rechts bewegt. Zusätzlich sind in Fig. 6 exemplarisch als Maß für die zentrale Tendenz der Verteilung der Fehlversatzvektoren $\mathbf{t}_{\text{off}}$ der Mittelwert und der Median gezeigt. Es ist klar zu sehen, dass der Median eine bessere Schätzung des kalibrierabhängigen Versatzes liefert als der Mittelwert. Da die Verteilung in x- und y-Richtung nicht gaußförmig ist, ist der Mittelwert von dem Verteilungsschwerpunkt weiter entfernt als der Median.

In anderen Worten ausgedrückt zeigt Fig. 6 ein Streudiagramm und das Histogramme der berechneten Versätze zwischen den durch Ähnlichkeitsanalyse erhaltenen Relativbewegungstranslationsvektoren und den gemessenen Relativbewegungstranslationsvektoren gemäß Gleichung 4. Das Diagramm aus Fig. 6 ist exemplarisch das Ergebnis einer Abtastung von 170 Gesichtsfeldern bzw. Teilbildern, wenn von links nach rechts abgetastet wird. Das Rechteck 44 visualisiert die nachher noch näher erörterten Grenzbeschränkungen mit $\pm$ 3 mal der mittleren absoluten Abweichung bezüglich des Medianwerts in x- und y-Richtung.

Die mechanische und Steuerungsgenauigkeit des Relativbewegungserzeugers 24 resultiert in Fehlversatzvektoren $\mathbf{t}_{\text{off}}$, die um den ermittelten Median herum variieren. Dies ist auch deutlich in Fig. 6 zu sehen. Als eine Schätzung dieser Streuung, d.h. als ein Maß für die Dispersion, könnte beispielsweise die Standardabweichung verwendet werden, aber es wird bevorzugt, die Medianabsolutabweichung in der x-Richtung, nämlich $\widetilde{\sigma}_{\text{x-off}}$ und in y-Richtung, nämlich $\widetilde{\sigma}_{\text{y-off}}$, als Grundlage für die Fehlerstatistikerfassung zugrunde zu legen. Dazu wird beispielsweise von jedem Wert der Verteilung 40 bzw. 42 der Median abgezogen, d.h. $\widetilde{\mu}_{\text{x-off}}$ bzw. $\widetilde{\mu}_{\text{y-off}}$, woraufhin der Absolutwert jeder so ermittelten Differenz ermittelt wird, um die so ermittelten Absolutwerte wieder in eine Reihenfolge zu bringen und den Median der Verteilung von Absolutwerten zu bestimmen. So ergeben sich $\widetilde{\sigma}_{\text{x-off}}$ und $\widetilde{\sigma}_{\text{y-off}}$. Zur Vereinfachung wird im Folgenden der Vektor, bestehend aus $\widetilde{\mu}_{\text{x-off}}$ und $\widetilde{\mu}_{\text{y-off}}$ mit $\widetilde{\mu}_{\text{off}}$ bezeichnet und der Vektor bestehend aus den Median-Absolutabweichungswerten mit $\widetilde{\sigma}_{\text{off}}$. Diese Werte werden bei der Fehlerstatistikbestimmung 38 bestimmt, um bei der Optimierungsproblemlösung in Schritt 36 obere und untere Grenzen für die Variation der möglichen Position der Teilbilder festzulegen. Insbesondere wird bevorzugterweise das 3-fache der Absolutmedianabweichung als Begrenzungsbedingung verwendet. Fig. 6 zeigt exemplarisch bei 44 die aus der Verteilung in Fig. 6 resultierende Begrenzungsnebenbedingung für die Versatzvektoren, die dann später bei Schritt 36 verwendet wird. Sie sind auch in Fig. 5 exemplarisch angezeigt, d.h. exemplarisch für das Beispiel mit einer Anordnung von 3 x 3 überlappenden Teilbildern.

Für der Reihe aufgenommene Teilbilder $TB_1$ bis $TB_N$ - und zwar der Reihe nach aufgenommen in einer bestimmten Scanrichtung - ergeben sich folgende Ungleichungen für die obere und die untere Schranke für die Differenzen der Aufnahmepositionsvariablen:

Gleichung 5:

$$\mathbf{p}_{i+1} - \mathbf{p}_i \leq \mathbf{t}_{\text{proj}_i,i+1} + \widetilde{\mu}_{\text{off}} + 3*\widetilde{\sigma}_{\text{off}}, \ i \in [1, N-1]$$

Gleichung 6:

$$\mathbf{p}_i - \mathbf{p}_{i+1} \leq -\mathbf{t}_{\text{proj}_i,i+1} - \widetilde{\mu}_{\text{off}} + 3*\widetilde{\sigma}_{\text{off}}, \ i \in [1, N-1]$$

,

wobei bei $\widetilde{\mu}_{\text{off}}$ und $\widetilde{\sigma}_{\text{off}}$ abhängig von der Richtung des Scans sind, wie es im Vorhergehenden beschrieben worden ist.

In Matrixnotation führt dies zur Ungleichungsnebenbedingung:

Gleichung 7:

$$Cp \leq b.$$

welche wiederum bei der Lösung des Optimierungsproblems in Schritt 36, d.h. von Gleichung 3, berücksichtigt wird.

Insbesondere wird also bei Schritt 36 das gewichtete Kleinste-Quadrate-Gleichungssystem gemäß Gleichung 3 gelöst, indem die sich aus der Fehlerstatistik, wie sie in Schritt 38 ermittelt worden ist, ergebende Nebenbedingung aus Gleichung 7 berücksichtigt wird, was insgesamt das in Schritt 36 zu lösende Optimierungsproblem ergibt:

Gleichung 8:

$$\operatorname*{argmin}_{\mathbf{p}}(\mathbf{t}^T\mathbf{W}^2\mathbf{t} - 2\mathbf{t}^T\mathbf{W}^2\mathbf{A}\mathbf{p} + \mathbf{p}^T\mathbf{A}^T\mathbf{W}^2\mathbf{A}\mathbf{p})$$

unter der Nebenbedingung

$$Cp - b \leq 0.$$

Das Optimierungsproblem gemäß Gleichung 8 stellt ein konvexes Optimierungsproblem mit einer quadratischen Funktion und einer Ungleichheitsnebenbedingung dar, d.h. ein sogenanntes quadratisches Programm. Quadratische Programmierungen können unter Verwendung des Karush-Kuhn-Tucker (KKT) Theorems gelöst werden. Das KKT-Theorem ist im Wesentlichen eine Erweiterung der Lagrange'schen Multiplikatoren, wodurch die Ungleichheitsnebenbedingungen entweder aktiv oder inaktiv sind. Aktiv bedeutet, dass eine Ungleichheitsbedingung die Lösung tatsächlich beschränkt, und folglich vom Lagrangian-Typ ist. Eine inaktive Nebenbedingung ist wiederum eine Nebenbedingung, die die Lösung nicht beschränkt und folglich die Lösung auch nicht beeinträchtigt.

Das Ergebnis der Optimierungsproblemlösung in Schritt 36 ist somit ein Satz optimaler Aufnahmepositionsvariablen $\mathbf{p}_i$, die zusammen mit den Teilbildern $TB_i$, wie sie in Schritt 30 aufgenommen worden sind, eine Mosaikaufnahme ergeben, die, wie es in Fig. 2 angezeigt ist, unter Zurhilfenahme der bestimmten bzw. geschätzten Aufnahmepositionen $\mathbf{p}_i$ und einer geeigneten Interpolation oder anderen Verschmelzungsoperation optional in einem Schritt 46 zu einem in einem regelmäßigen globalen Raster definierten Gesamtbild zusammengefügt werden könnten.

Nachdem im Vorhergehenden ein Ausführungsbeispiel beschrieben worden ist, wird im Folgenden ein Ergebnis bzw. ein Testergebnis beschrieben, das mittels des vorhergehend beschriebenen Vorgehens erhalten worden ist. Zusammensetzungs- bzw. Mosaikerzeugungsalgorithmen werden typischerweise nur visuell bewertet. Eine objektive Bewertung ist insbesondere bei der Mikroskopie eine schwierige Aufgabe, da keine Grundwahrheit verfügbar ist, mit der das zusammengesetzte Bild verglichen werden kann. Daher kann ein Verfahren verwendet werden, dass auf der Erzeugung von zervikalen synthetischen virtuellen Objektträgern basiert, um eine Grundwahrheit zu erhalten über die Positionierungsgenauigkeit des Zusammensetzungsalgorithmus [8]. Zum Zweck des Erzeugens eines solchen synthetischen Objektträgers wird auf mehreren realen Objektträgern die Verteilung der Zellen analysiert und die mittlere Hintergrundfarbe wird gemessen. Nachfolgend wird eine Szene erzeugt, bei der die mittlere Hintergrundfarbe mit der gemessenen übereinstimmt. Auf dieser Szene werden Bilder von zervikalen Zellen und zervikalen Zellenclustern gemäß der gemessenen realen Verteilung verteilt. Diese Szene wird dann in 1000 x 1000 Pixel$^2$ Gesichtsfelder geschnitten, die jeweils etwa eine 20 % Überlappung zu den benachbarten Bildern aufweisen. Um die Positionierungsgenauigkeit der Stufe nachzuahmen, variieren die Schneidepositionen beliebig um den projizierten Schnitt herum. Jedes Feld wird separat verfälscht durch additives weißes Gauß'sches Rauschen. Die Felder können dann unter Verwendung eines Mosaikbildungsalgorithmus zusammengesetzt werden, und die resultierenden Gesichtsfeldpositionen der Gesichtsfelder können dann mit den tatsächlichen bekannten geschnittenen Positionen verglichen werden.

Zum Testen obigen Ausführungsbeispiels wurde dieser Lösungsansatz erweitert, um besser mit den realen Umständen in der Mikroskopie übereinzustimmen. Die Schnittposition durfte nicht nur um den projizierten Schnitt herum variieren, sondern außerdem wurden zusätzlich Versätze eingeführt, die auf den gemessenen mittleren Versätzen für die drei Abtastrichtungen eines echten Objektträgers basieren, wie es oben beschrieben ist. Da nachzuweisen war, dass der Algorithmus speziell geeignet ist für Objektträger mit ausgedehnten Bereichen geringen Informationsinhalts, wurde zusätzlich sichergestellt, dass die Überlappungsbereiche zwischen benachbarten Gesichtsfeldern auf beliebige Weise mit einer Wahrscheinlichkeit von 20 % vollständig frei von Informationsinhalt sind. Ferner ist jedes Gesichtsfeld schattiert, um die Helligkeitsverteilung zu simulieren, die in der Mikroskopie vorliegt. Zum Zweck der Schattierung wurde ein Bild eines Bereichs auf einem Objektträger ohne Informationsinhalt als weißes Referenzbild genommen. Die Schattierung wurde erreicht durch Umkehren des zweipunkt- Kalibrierungsschemas unter Verwendung eines leeren schwarzen Referenzbildes, wie z.B. definiert durch Jähne [12]. Die Größe der synthetisierten Objektträger, die für die Bewertung verwendet wurden, wurde auf 20 x 30 Gesichtsfelder erweitert.

150 synthetische Objektträger, jeweils mit 20 x 30 Gesichtsfeldern, wurden erzeugt. Diese Objektträger wurden unter Verwendung des obigen Algorithmus zusammengesetzt. Für den Vergleich wurden sie auch bewertet unter Verwendung der gewichteten Kleinste-Quadrate-Optimierung, die vorher in [8] präsentiert wurde. Zusätzlich wurden dieselben bewertet unter Verwendung einer Standard-Kleinste-Quadrate-Optimierung, wie sie durch [4] eingeführt wurde, und Verwenden einer naiven aufeinanderfolgenden Zusammensetzung ohne Optimierung. Für jedes Gesichtsfeld ist die Fehlermetrik der relative euklidische Abstand zwischen dem Referenztranslationsvektor zu jedem benachbarten Sichtfeld und dem Translationsvektor der sich von den unterschiedlichen Zusammensetzschemata ergibt. Tabelle 1 reproduziert die Ergebnisse, die durch die Bewertung erhalten werden und zeigt deutlich, dass das präsentierte Verfahren die besten Ergebnisse erzielt. Auf den ersten Blick scheint der eher hohe mittlere Fehler von 1,82 Pixel kein sehr viel versprechendes Ergebnis. Man muss sich jedoch bewusst sein, dass diese Ergebnisse auch Gesichtsfelder mit leeren Überlappungsbereichen umfassen, die nicht exakt platziert werden können. Somit gibt der mittlere Fehler von 0,82 Pixel eine bessere Schätzung der Positioniergenauigkeit. Angesichts dessen ist klar, dass die große Mehrzahl aller Gesichtsfelder genau platziert werden konnte. Das gewichtete Kleinste-Quadrate-Optimierungsschema erzielt gute Ergebnisse mit einem mittleren Positionierungsfehler von 0,822 Pixeln. Wenn jedoch berücksichtigt wird, dass der Mittelwert und die Standardabweichung sehr viel höher sind im Vergleich zu dem vorgeschlagenen Schema, sind die zusammengesetzten Ergebnisse nicht so einheitlich. Diese Ergebnisse zeigen deutlich, dass das Beschränken der Lösung ein einheitlicheres Mosaik ergibt. Die schlechteren Ergebnisse, die durch die Optimierung unter Verwendung von Standard-Kleinste-Quadrate-Optimierung erhalten werden, stammen von den Charakteristika des Verfahrens. Eine Standard-Kleinste-Quadrate-Optimierung verteilt nur den Fehler gleichmäßig über alle Gleichungen und unterscheidet nicht zwischen guten und schlechten Übereinstimmungen. Die naive fortlaufende Ausrichtung ohne Optimierung zeigt die erwarteten schlechten Ergebnisse.

Der obige Algorithmus wurde ferner visuell an mehreren realen Beispielen getestet. Histologie-, Zervikalzellen- und Blutausstrich-Objektträger wurden abgetastet und dann zusammengesetzt. Ein histologischer Objektträger von künstlich aufgewachsenem menschlichem Hautgewebe, das mit dem vorliegenden Verfahren zusammengesetzt wurde, wurde visuell untersucht. Durch visuelle Untersuchung konnten beinah keine Versätze zwischen benachbarten Gesichtsfeldern erkannt werden. Dies zeigt, dass die vorgeschlagene synthetische Bewertung eine Grundwahrheit über die Positionierungsgenauigkeit der Zusammensetzschemata unter Worst-Case-Annahmen ergeben kann. Aber bei den realen Anwendungen ist weder die Schattierung so extrem, noch gibt es dort normalerweise so viele leere Überlappungsbereiche. Somit sollte man die Werte, wie sie in Tabelle 1 präsentiert sind, nicht als absolut ansehen, sondern eher als eine Möglichkeit des Grundwahrheitsvergleichs von unterschiedlichen Zusammensetzschemata.

Tabelle 1 stellt Positionierungsfehlerergebnisse dar, die durch Bewerten von 150 synthetischen Objektträgern der Größe 20 x 30 Gesichtsfeldern und einer Wahrscheinlichkeit eines leeren Überlappungsbereichs von 20 % erhalten wurden. Der Fehler ist gegeben als Mittelwert $\mu_e$, Standardabweichung $\sigma_e$, Medianwert $\tilde{\mu}_e$, Minimum $min_e$ [Pixel] und Maximum $max_e$ des euklidischen Abstands zwischen dem angenommen Translationsvektor zu den benachbarten Sichtfeldern und dem Translationsvektor, der durch Zusammensetzen berechnet wird.

Tabelle 1

| Algorithmus | $\mu_e \pm \sigma_e$ [pixel] | $\tilde{\mu}_e$ [pixel] | $min_e$ [pixel] | $max_e$ [pixel] |
|---|---|---|---|---|
| aufeinanderfolgende Ausrichtung | 208,679±279,442 | 104,766 | 0,003 | 2620,28 |
| Kleinste-Quadrate-optimierte Zusammensetzung | 60,976±48,521 | 47,789 | 0,100 | 424,102 |
| Gewichtete Kleinste-Quadrate-optimierte Zusammensetzung | 4,111±12,523 | 0,822 | 0,002 | 307,827 |
| Optimierung basierend auf quadratischer Programmierung gemäß obigen Ausführungsbeispielen | 1,820±2,774 | 0,820 | 0,002 | 71,881 |

Somit wurde ein vorteilhafter Algorithmus für ein automatisches Zusammensetzen von Mikroskopiebildem beschrieben. Das Zusammensetzen wurde als Parameteroptimierungsproblem angesehen, das global für alle Bilder parallel gelöst wurde. Ungleichheitsbeschränkungen wurden berücksichtigt, indem eine Optimierungstechnik angewendet wurde, die solche Beschränkungen handhaben kann. Die Verwendung des Karush-Kuhn-Tucker-Theorems der quadratischen Programmierung konnte verwendet werden, um das System der Gleichungen zu lösen. Quantitative Bewertungen unter realistischen Bedingungen wurden präsentiert, die das Verfahren erweitern, das synthetische Bilder verwendet, um eine genaue Grundwahrheit bereitzustellen. Reale Bilder wurden verwendet, und die Ergebnisse wurden bewertet. Die Ergebnisse zeigen visuell und quantitativ, dass der obige Mosaikbildungsalgorithmus äußerst genaue Ergebnisse liefert.

Obige Ausführungsbeispiele beschrieben also Mosaikaufnahmeerzeugungskonzepte, die in der virtuellen Mikroskopie verwendet werden könnten, d.h. zur geometrischen Rekonstruktion eines tatsächlichen Objektträgers aus vielen Teilansichten bzw. Teilbildern. Moderne Mikroskopiesysteme, wie z.B. im klinischen Bereich, und wie sie beispielsweise auch für das Aufnahmegerät 12 verwendet werden können, sind meistens zwar bereits hinsichtlich geometrischer Verzeichnungen und Störungen korrigiert, aber doch verbleibt eine Fehlerquelle. Und zwar ist die dominante Fehlerquelle zumeist translatorischer Natur, d.h. die Teilbilder sind zueinander translatorisch versetzt, wenn man sie gemäß den Aufnahmepositionen, wie sie von dem Aufnahmegerät 12 erhalten werden, anordnen würde. Deshalb war bei den vorhergehenden Ausführungsbeispielen der Transformationsraum auf zwei Versatzvektorparameter, d.h. die x-Komponente und die y-Komponente eines Versatzvektors, beschränkt. Obige Ausführungsbeispiele könnten allerdings auch erweitert werden.

Das Ziel des Aneinanderfügens bzw. der Mosaikerzeugung besteht darin, jedes Teilbild bzw. jede Teilansicht mit den benachbarten Teilansichten auf eine solche Art und Weise auszurichten, dass fast keine sichtbaren geometrischen Störungen verbleiben. Obige Ausführungsbeispiele waren dabei in wenige Schritte unterteilt. Zunächst wurden in einem Schritt die Transformationen zwischen jeder Teilansicht und ihren direkten Nachbarn bestimmt. Exemplarisch wurde dabei bei den vorhergehenden Ausführungsbeispielen auch bestimmt, wie gut die jeweilige Übereinstimmung an dem bestimmten Versatzvektor war. Letzteres könnte allerdings bei alternativen Ausführungsbeispielen auch weggelassen werden, d.h. die Matrix W könnte die Einheitsmatrix sein, d.h. mit nur Einsen entlang der Diagonalen. In einem weiteren Schritt wurden die so ermittelten Transformationsparameter verwendet, um eine Schätzung der Positionierungsgenauigkeit des Relativbewegungserzeugers zu erhalten. Dieses Wissen wurde verwendet, um spezifische obere und untere Schranken für die mögliche Position der Teilbilder statistisch zu bestimmen. Schließlich wurde ein gewichtetes (oder ungewichtetes) Gleichungssystem unter Verwendung der Transformationsparameter aus dem zuerst genannten Schritt gebildet, das einer Ungleichheitsbeschränkung durch die Parameter aus dem zweitgenannten Schritt unterlag. Das System kann zu einem ungleichheitsbeschränkten quadratischen Programmierungsproblem umgewandelt werden, wobei ein solches System wiederum unter Verwendung des Karush-Kuhn-Tucker-Theorem lösbar ist.

Gemäß obigen Ausführungsbeispielen wurde folglich das Optimierungsproblem nicht als vollständig abgelöst von dem Bildaufnahmeschritt behandelt. Dies liefert die oben beschriebenen Verbesserungen. Wird nämlich die Positionierungsgenauigkeit des Relativbewegungserzeugers 24 analysiert, kann damit der Beobachtung Beachtung geschenkt werden, dass die Positionierung nur in einem spezifischen Rahmen variiert. Diese Kenntnis kann gemäß obiger Ausführungsbeispiele verwendet werden, um den Optimierungsschritt robuster zu machen, indem nämlich obere und untere Schranken für die möglichen Bildumpositionierungen in den Mosaikerzeugungsprozess bzw. dem Optimierungsproblemlösungsprozess spezifiziert werden. Das Optimierungsproblem kann, wie es im Vorhergehenden beschrieben worden ist, unter Verwendung einer quadratischen Programmierung mit Ungleichheitsbeschränkungen gelöst werden.

Obige Ausführungsbeispiele beschreiben also einen Lösungsansatz zum Erzeugen virtueller Objektträger, der die Positionierungsgenauigkeit der Relativbewegungserzeugung zwischen Gesichtsfeld der Objektiv/Bildsensoranordnung einerseits und dem zu untersuchendem Objekt in der Objektebene andererseits in dem Optimierungsschritt einschließt bzw. mitberücksichtigt. Um bei der Mikroskopie einen vollständigen Objektträger zu erfassen, müssen eine große Anzahl von Gesichtsfeldern aufgenommen werden, wie z.B. durch Bewegen eines Verfahrtisches auf eine gesteuerte Weise. Diese Gesichtsfelder sind auf solch eine Weise ausgerichtet, dass ein global einheitlicher virtueller Objektträger gebildet wird. Abhängig von der Positionierungswiederholbarkeit des Verfahrbühne und der Genauigkeit der Verfahrbühnenkalibrierung führt dies jedoch zu Ausrichtungsfehlern. Diese Fehler werden normalerweise aufgelöst durch Anwenden eines Mosaikbildungsalgorithmus. Obige Algorithmen erweitern bekannte Mosaikbildungslösungsansätze durch Analysieren der Positionierungsgenauigkeit der Bühne und Aufnehmen dieser Erkenntnis, um den Mosaikbildungsprozess stabiler zu machen.

Gemäß einigen obigen Ausführungsbeispielen wurde sogar die Güte der bestimmten Transformationen bzw. Versatzvektoren gemessen und so das Gleichungssystem gewichtet und zum anderen die Lösung des Gleichungssystems mit oben genannten Nebenbedingungen beschränkt. Die Nebenbedingungen ergaben sich aus der Beobachtung, dass die Bühne 24 nur in einem begrenzten Bereich fehlerhaft positioniert. Aus dieser Beobachtung ließ sich eine Nebenbedingung aufstellen, die die mögliche Verschiebung auf diesen Bereich begrenzt.

Obige Ausführungsbeispiele zeichnen sich somit auch dadurch aus, dass die Positionierungsgenauigkeit des Relativbewegungserzeugers bestimmt und Nebenbedingungen aufgestellt werden. Bei obigen Ausführungsbeispielen werden für alle drei Verfahrrichtungen eines mosaikförmigen Aufnahmekurses eigene Nebenbedingungen aufgestellt, was allerdings nur exemplarisch ist und nicht bei allen Ausführungsbeispielen der Fall sein muss. Des Weiteren wurde bei obigen Ausführungsbeispielen ein Registrierungsproblem aufgestellt und gelöst, das eine quadratische Funktion mit Nebenbedingungen darstellt. Die Lösung wurde mittels eines quadratischen Programms auf Basis des Karush-Kuhn-Tucker-Theorems ermittelt.

Obige Ausführungsbeispiele sind in vielerlei Hinsicht nutzbar. Generell werden virtuelle Mikroskopieträger in einer Vielzahl von Anwendungsmöglichkeiten genutzt. Beispielsweise können virtuelle Mikroskopieträger, d.h. die Ergebnisse obiger Mosaikerzeugung, zur Digitalisierung in der Mikroskopie bzw. Erstellung eines virtuellen Mikroskopieträgers verwendet werden, zur Generierung von Gesamtansichten eines Mikroskopieträgers, zum stufenlosen Zoomen in einem Mikroskopieträger, d.h. zur Generierung verschiedener Vergrößerungsstufen, für Dokumentationszwecke, indem beispielsweise Regionen von Interesse, wie Regionen, die zu einer Diagnose herangezogen werden, entsprechend digital annotiert werden, zur Analyse digitaler Mikroskopieträger aus der Ferne, wie z.B. über das Internet, und zur Qualitätssicherung, nach dem Motto: "Es wurde wirklich alles angeschaut, was anzusehen ist, und es zählt keine Lücken". Schließlich können obige Ausführungsbeispiele bzw. virtuelle Mikroskopieträger, die gemäß obigen Ausführungsbeispielen erstellt worden sind, dazu verwendet werden, dass mehrere Personen die gleiche Region von Interesse analysieren können, was eine Vergleichsmöglichkeit für dieselben liefert.

Anwendungsgebiete obiger Ausführungsbeispiele bestehen also in der Medizin, wie z.B. der Analyse von mikroskopischen medizinischen Proben. Allerdings könnten obige Ausführungsbeispiele auch bei der Lehre eingesetzt werden, wie z.B. im Unterricht zur Darstellung biologischer Proben oder zu Prüfungszwecken, so dass nämlich Prüflinge digitale Proben annotieren können, um dort beispielsweise entartete Zellen zu finden. In der Technik könnten obige Ausführungsbeispiele zur Analyse, Prüfung von Bauteilen, Dokumentation von Fehlerstellen auf Bauteilen oder dergleichen verwendet werden. Beispielsweise könnten obige Ausführungsbeispiele in der Mikroelektronik verwendet werden, wie z.B. zur Analyse von Halbleiterbauteilen, wie z.B. Chips. In der Biologie und Pharmazie könnten obige Ausführungsbeispiele zur Analyse und Dokumentation des Effekts von chemischen/pharmakologischen Substanzen auf biologischen Proben verwendet werden.

Unter anderem beschrieben obige Ausführungsbeispiele ein Vorgehen, das sich durch folgendes auszeichnete: Die Registrierung bzw. Transformationsbestimmung wurde zwischen einander angrenzenden Ansichtsfeldern mittels eines inversen normalisierten Kreuzleistungsspektrums oder anderen Ähnlichkeitsmaßen bestimmt. Die Transformationsbestimmung wurde mittels des Ansatzes von Foroosh [3] erweitert oder so Sub-Pixelgenauigkeit erzeugt. Die Registrierung wurde aus Gründen der Rechenleistung und Performance nur im Überlappungsbereich durchgeführt werden. Die Bestimmung eines Gütemaßes für die berechneten Transformationen kann dafür verwendet werden, Ausreißerwerte bei der paarweisen Registrierung weniger schädlich zu machen. Die Generierung eines überbestimmten linearen Gleichungssystems als globales Optimierungsproblem ist obigen Ausführungsbeispielen gemeinsam. Es fand eine Überführung des linearen Gleichungssystems in ein gewichtetes Kleinste-Quadrate-Problem statt. Eine Gewichtung mittels des Gütemaßes kann verwendet werden. Schließlich kann das gewichtete kleinste-Quadrate-Problem in eine quadratische Funktion aufgelöst werden. Die Bestimmung der Positionierungsgenauigkeit von Bühne und Kalibrierung kann auf Basis der berechneten Transformationen stattfinden. Die Positionierungsgenauigkeit dient der Einschränkung des Optimierungsproblems durch Ungleichheitsnebenbedingungen. Die Lösung des quadratischen Problems mit Ungleichheitsnebenbedingungen kann als quadratisches Programm auf Basis des Karush-Kuhn-Tucker-Theorem stattfinden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Literaturverzeichnis

[1] F. Leong and J. McGee, "Automated complete slide digitization: a medium for simultaneous viewing by multiple pathologists," The Journal of Pathology, vol. 195, no. 4, pp. 508-514, 2001.

[2] K. Saeger, K. Schlüns, T. Schrader, and P. Hufnagl, "The virtual microscope for routine pathology based on a pacs system for 6 gb images," in International Congress Series, vol. 1256. Elsevier, 2003,pp. 299-304.

[3] R. Szeliski, Image Alignment and Stitching: A Tutorial. Now Publishers Inc, 2006.

[4] J. Davis, "Mosaics of scenes with moving objects," in Computer Vision and Pattern Recognition, 1998. Proceedings. 1998 IEEE Computer Society Conference on, 23-25 June 1998, pp. 354-360.

[5] E.-Y. Kang, I. Cohen, and G. Medioni, "A graph-based global registration for 2d mosaics," in Proc. 15th International Conference on Pattern Recognition, I. Cohen, Ed., vol. 1, 2000, pp. 257-260 vol.1.

[6] C. Sun, R. Beare, V. Hilsenstein, and P. Jackway, "Mosaicing of microscope images," in Proc. Digital Image Computing: Techniques and Applications DICTA ' 05, R. Beare, Ed., 2005, pp. 343-348.

[7] B. Appleton, A. Bradley, and M. Wildermoth, "Towards optimal image stitching for virtual microscopy," in Proc. Digital Image Computing: Techniques and Applications DICTA ' 05, A. Bradley, Ed., 2005, pp. 299-306.

[8] D. Steckhan, T. Bergen, T. Wittenberg, and S. Rupp, "Efficient large scale image stitching for virtual microscopy," in Proceedings of the 30th Annual International Conference of the IEEE EMBS, Aug. 2008, pp. 4019-4023.

[9] D. Steckhan and T. Wittenberg, "Optimized graph-based mosaicking for virtual microscopy," in Medical Imaging 2009: Image Processing, vol. 7259, Jan. 2009.

[10] H. Foroosh, J. Zerubia, and M. Berthod, "Extension of phase correlation to subpixel registration," IEEE Trans. Image Processing, vol. 11, no. 3, pp. 188-200, 2002.

[11] J. Proakis and M. Salehi, Digital Communications. McGraw-Hill New York, 1995.

[12] B. Jähne, Digital image processing: concepts, algorithms and scientific applications. Springer-Verlag London, UK, 1991.

[13] D. Wald, M. Reeff, G. Szkely, P. Cattin, and D. Paulus, "Fließende" Überblendung von Endoskopiebildern für die Erstellung eines Mosaiks," in Bildverarbeitung für die Medizin 2005, H. P. Meinzer, H. Handels, A. Horsch, and T. Tolxdorff, Eds. Springer, Berlin, Heidelberg, New York, 3 2005, pp. 287-291. [Online]. Available: ftp://ftp.vision.ee.ethz.ch/publications/proceedings/eth biwi 00339.pdf

[14] Bacus, J. V. und J. W. Bacus: Verfahren und Gerät zur Erzeugung eines virtuellen Mikroskopieträgers, 1998. International Patent Application WO 1998/039728.

[15] Bacus, J. V. und J. W. Bacus: Method and aparatus of mechanical stage positioning in virtual microscopy image capture, 2006. International Patent Application WO 2006/023443 A2.

[16] Kuhn, H. und . Tucker: Nonlinear programming. ACM SIGMAP Bulletin, S. 6-18, 1982.

[17] Shirota, T.: Virtual Slide Generation Devices, 2008. United States Patent Application US 2008/0187208 A1.

[18] Zeineh, J. A. und R.-T. Dong: System and methods for stitching image blocks to create seamles magnified images of a microscope slide, 2006. United States Patent Application US 2006/0045388.

**Patentansprüche**

1. Vorrichtung zum Erzeugen einer Mosaikaufnahme einer Objektebene (16) zur Verwendung in der virtuellen Mikroskopie, mit

   einem Aufnahmegerät (12) zum abschnittweisen Aufnehmen der Objektebene (16) an einer zweidimensionalen Verteilung von Aufnahmepositionen, um Teilbilder zu erhalten, die Aufnahmen von Abschnitten der Objektebene (16) darstellen, die sich gegenseitig überlappen, unter Zuordnung der Aufnahmepositionen zu den Teilbildem, wobei das Aufnahmegerät (12) so ausgebildet ist, dass die den Teilbildern zugeordneten Aufnahmepositionen von tatsächlichen Aufnahmepositionen gemäß einer Fehlerstatistik abweichen; und

   einem Prozessor (14) zum Ermitteln von Versatzvektoren zwischen Paaren sich gegenseitig überlappender Teilbilder durch Ähnlichkeitsanalyse der sich überlappenden Teilbilder und zum Lösen eines Optimierungsproblems zur Auffindung eines optimalen Satzes von Aufnahmepositionsvariablen für die Teilbilder zur Minimierung eines Maßes für eine Abweichung zwischen den Versatzvektoren der Paare sich gegenseitig überlappender Teilbilder einerseits und Differenzen der Aufnahmepositionsvariablen der Paare sich gegenseitig überlappender Teilbilder andererseits unter Einhaltung einer Nebenbedingung für die Aufnahmepositionsvariablen, die von der Fehlerstatistik abhängt, bei der das Aufnahmegerät (12) ausgebildet ist, um die zweidimensionale Verteilung von Aufnahmepositionen sequenziell in einem Aufnahmekurs (32) zu durchlaufen, wobei der Prozessor (14) so ausgebildet ist, dass die Nebenbedingung die Differenzen von Aufnahmepositionsvariablen für Paare von Teilbildern abhängig von der Fehlerstatistik begrenzt, die entlang des Aufnahmekurses unmittelbar aufeinander folgen.

2. Vorrichtung gemäß Anspruch 1, bei der das Aufnahmegerät (12) so ausgebildet ist, dass der Aufnahmekurs (32) ein meanderförmiger Kurs mit einer Hin-Richtung, einer Her-Richtung und einer Vorschubrichtung ist, wobei Aufnahmepositionen von gemäß dem meanderförmigen Zick-Zack-Kurs unmittelbar aufeinander folgenden Teilbildern entlang genau einer jeweiligen der drei Richtungen zueinander liegen, wobei die Fehlerstatistik für die Hin-Richtung, die Her-Richtung und die Vorschubrichtung unterschiedlich ist, wobei der Prozessor (14) so ausgebildet ist, dass die Nebenbedingung für die Differenzen von Aufnahmepositionsvariablen für Paare von Teilbildern, deren zugeordnete Aufnahmepositionen zueinander entlang der Hin-Richtung liegen, für Paare von Teilbildern, deren zugeordnete Aufnahmepositionen zueinander entlang der Her-Richtung liegen, und für Paare von Teilbildern, deren zugeordnete Aufnahmepositionen zueinander entlang der Vorschubrichtung liegen, gemäß der Fehlerstatistik unterschiedlich ist.

3. Vorrichtung gemäß Anspruch 1 oder 2, bei der der Prozessor (14) ausgebildet ist, um als Optimierungsproblem das quadratische Optimierungsproblem

$$\arg \min_{p} \left( \left\| W \left( A p - t \right) \right\|^2 \right)$$

mit der Nebenbedingung

$$Cp \leq b$$

zu lösen, wobei

*p* ein Vektor mit $2 \times N$ Komponenten ist, die paarweise den Aufnahmepositionsvariablen der N Teilbilder entsprechen;

*t* ein Vektor mit $2 \times M$ Komponenten ist, die paarweise den M Versatzvektoren entsprechen;

*A* eine Matrix mit $2 \times M$ Zeilen und $2 \times N$ Spalten ist, wobei die Zeilen jeweils $2 \times N$-2 Nullen sowie eine Eins und eine Minus-Eins jeweils an Spaltenpositionen ausweisen, die den Teilbildern entsprechen, zwischen denen der Versatzvektor ermittelt ist, der in dem Vektor *t* dem der jeweiligen Zeile entsprechenden Komponentenpaar entspricht;

*W* eine Matrix mit $2 \times M$ Zeilen und 2xM Spalten ist;

*C* eine Matrix mit $2 \times N$ Spalten ist, wobei die Zeilen jeweils $2 \times N$-2 Nullen sowie eine Eins und eine Minus-Eins jeweils an Spaltenpositionen ausweisen, die Teilbildern entsprechen, die entlang des Aufnahmekurses unmittelbar aufeinander folgen; und

*b* ein Vektor ist, dessen Komponenten von der Fehlerstatistik abhängen.

4. Vorrichtung gemäß Anspruch 3, bei der *W* eine Diagonalmatrix ist, dessen Diagonalkomponenten $W_{ii}$ in der jeweiligen Zeile i der Matrix *W* einem Maß für eine Ähnlichkeit der Teilbilder, zwischen denen der Versatzvektor an der entsprechenden Komponente des Vektors *t* ermittelt ist, in einem Überlappbereich derselben, wie er durch eben diesen Versatzvektor definiert wird, entspricht.

5. Vorrichtung gemäß einem der vorhergehenden Ansprüche, bei der der Prozessor (14) ausgebildet ist, um die Fehlerstatistik auf Basis zumindest eines Teils der Versatzvektoren und der Differenzen der Aufnahmepositionen für die Paare von Teilbildern für die die jeweiligen Versatzvektoren ermittelt sind, zu bestimmen.

6. Vorrichtung gemäß Anspruch 5, bei der der Prozessor (14) ausgebildet ist, um als die Fehlerstatistik eine zentrale Tendenz und eine Dispersion einer Verteilung (4040, 42) von Abweichungen zwischen dem zumindest einen Teil der Versatzvektoren und der Differenz der Aufnahmepositionen der Teilbilder, für die der Teil der Versatzvektoren jeweils ermittelt ist, zu bestimmen.

7. Vorrichtung gemäß einem der vorhergehenden Ansprüche, bei der das Aufnahmegerät (12) so ausgebildet ist, dass die zweidimensionale Verteilung von Aufnahmepositionen im Wesentlichen einer regelmäßigen zweidimensionalen Verteilung in Spalten und Zeilen entspricht.

8. Vorrichtung gemäß einem der vorhergehenden Ansprüche, bei der der Prozessor (14) so ausgebildet ist, dass das Maß für die Abweichung mit einem Maß für eine Ähnlichkeit der sich überlappenden Teilbereiche, für die die Versatzvektoren jeweils ermittelt sind, gewichtet ist.

9. Vorrichtung gemäß einem der vorhergehenden Ansprüche, bei der das Aufnahmegerät (12) folgende Merkmale aufweist:

einen Bildsensor (18);

eine Optik (20) zum Abbilden eines Gesichtsfeldausschnitts (22) der Objektebene (16) auf den Bildsensor (18);

einen Relativbewegungserzeuger (24) zum Bewirken einer lateralen Relativbewegung zwischen der Objektebene (16) einerseits und dem Bildsensor (18) und der Optik andererseits; und

eine Steuerung (28) zum Steuern des Relativbewegungserzeugers (24) und des Bildsensors, so dass die Objektebene (16) an der zweidimensionalen Verteilung von Aufnahmepunkten aufgenommen wird.

10. Vorrichtung gemäß einem Anspruch 9, bei der
die Steuerung (28) ausgebildet ist, um dem Relativbewegungserzeuger (24) Sollaufnahmepositionen vorzugeben, die Sollaufnahmepositionen als die Aufnahmepositionen den Teilbildern zuzuordnen und den Bildsensor auf ein Bestätigungssignal zur Bestätigung des Erreichens der Sollpositionen durch den Relativbewegungserzeuger (24) hin anzuweisen, ein jeweiliges Teilbild zu erzeugen, und der Relativbewegungserzeuger (24) ausgebildet ist, um eine relative laterale Lage zwischen der Objektebene (16) einerseits und dem Bildsensor (18) und der Optik (20) andererseits so lange zu regeln, bis die Sollaufnahmepositionen erreicht sind, und dann jeweils das Bestätigungssignal an die Steuerung (28) zu senden, oder

die Steuerung (28) ausgebildet ist, um dem Relativbewegungserzeuger (24) einen Aufnahmekurs vorzugeben und an Aufnahmezeitpunkten den Bildsensor (18) anzuweisen, ein jeweiliges Teilbild zu erzeugen, und den Relativbewegungserzeuger (24) anzuweisen, eine momentane Relativlageposition zu erfassen, die als Aufnahmeposition dem zu dem jeweiligen Aufnahmezeitpunkt erzeugten Teilbild zugeordnet wird, und der Relativbewegungserzeuger (24) ausgebildet ist, um die Relativlageposition zwischen der Objektebene (16) einerseits und dem Bildsensor (18) und der Optik (20) andererseits gemäß dem Aufnahmekurs zu verändern und auf die Anweisung von der Steuerung (28) hin die momentane Relativlageposition zu erfassen.

11. Vorrichtung gemäß Anspruch 9 oder 10, bei der die Optik (20) ein Mikroskopobjektiv und der Relativbewegungserzeuger (24) einen Verfahrtisch zum Verfahren einer Objektträgers aufweist, der die Objektebene definiert.

12. Verfahren zum Erzeugen einer Mosaikaufnahme einer Objektebene (16) zur Verwendung in der virtuellen Mikroskopie, mit

abschnittweisem Aufnehmen der Objektebene (16) durch ein Aufnahmegerät an einer zweidimensionalen Verteilung von Aufnahmepositionen, um Teilbilder zu erhalten, die Aufnahmen von durch ein Aufnahmegerät Abschnitten der Objektebene (16) darstellen, die sich gegenseitig überlappen, unter Zuordnung der Aufnahmepositionen zu den Teilbildern, wobei das Aufnahmegerät (12) so ausgebildet ist, dass die den Teilbildern zugeordneten Aufnahmepositionen von tatsächlichen Aufnahmepositionen gemäß einer Fehlerstatistik abweichen;

Ermitteln von Versatzvektoren zwischen Paaren sich gegenseitig überlappender Teilbilder durch Ähnlichkeitsanalyse der sich überlappenden Teilbilder durch einem Prozessor, und

Lösen eines Optimierungsproblems durch den Prozessor zur Auffindung eines optimalen Satzes von Aufnahmepositionsvariablen für die Teilbilder zur Minimierung eines Maßes für eine Abweichung zwischen den Versatzvektoren der Paare sich gegenseitig überlappender Teilbilder einerseits und Differenzen der Aufnahmepositionsvariablen der Paare sich gegenseitig überlappender Teilbilder andererseits unter Einhaltung einer Nebenbedingung für die Aufnahmepositionsvariablen, die von der Fehlerstatistik abhängt,

wobei das abschnittweise Aufnehmen so durchgeführt wird, dass das Aufnahmegerät (12) die zweidimensionale Verteilung von Aufnahmepositionen sequenziell in einem Aufnahmekurs (32) durchläuft, und die Nebenbedingung die Differenzen von Aufnahmepositionsvariablen für Paare von Teilbildern abhängig von der Fehlerstatistik begrenzt, die entlang des Aufnahmekurses unmittelbar aufeinander folgen.

13. Computer-Programm mit einem Programmcode zur Durchführung des Verfahrens nach Anspruch 12, wenn das Programm auf einem Computer abläuft.

**Claims**

1. Apparatus for generating a mosaic picture of an object plane (16) for utilization in virtual microscopy, comprising a capturing device (12) for portion-by-portion capturing of the object plane (16) at a two-dimensional distribution of capturing positions so as to obtain subimages which represent pictures of portions of the object plane (16) which mutually overlap, while allocating the capturing positions to the subimages, the capturing device (12) being configured such that the capturing positions allocated to the subimages deviate from actual capturing positions in accordance with error statistics; and

a processor (14) for determining offset vectors between pairs of mutually overlapping subimages by means of a similarity analysis of the overlapping subimages and for solving an optimization problem for finding an optimum set of capturing position variables for the subimages for minimizing a measure of a deviation between the offset vectors of the pairs of mutually overlapping subimages, on the one hand, and differences of the capturing position variables of the pairs of mutually overlapping subimages, on the other hand, while complying with a secondary constraint for the capturing position variables which depends on the error statistics,

wherein the capturing device (12) is configured to sequentially cycle through the two-dimensional distribution of capturing positions in a capturing path (32), the processor (14) being configured such that the secondary constraint limits, in dependence on the error statistics, the difference of capturing position variables for pairs of subimages which immediately follow one another along the capturing path.

2. Apparatus as claimed in claim 1, wherein the capturing device (12) is configured such that the capturing path (32) is a meandering path with a to direction, a fro direction and an advance direction, wherein capturing positions of subimages which immediately follow one another in accordance with the meandering zigzag path are located, in relation to one another, along precisely one respective a one of the three directions, the error statistics being different for the to direction, the fro direction and the advance direction, wherein the processor (14) is configured such that the secondary constraint for the differences of capturing position variables is different, in accordance with the error statistics, for pairs of subimages whose allocated capturing positions are located, in relation to one another, along the to direction, for pairs of subimages whose allocated capturing positions are located, in relation to one another, along the fro direction, and for pairs of subimages whose allocated capturing positions are located, in relation to one another, along the advance direction.

3. Apparatus as claimed in claims 1 or 2, wherein the processor (14) is configured to solve, as the optimization problem, the quadratic optimization problem

$$\arg\min_{p}\left(\left\|W(Ap-t)\right\|^{2}\right)$$

with the secondary constraint

$$Cp \leq b\,,$$

wherein

$p$ is a vector with $2\times N$ components which correspond to the capturing position variables of the N subimages in a pairwise manner;

$t$ is a vector with $2\times M$ components which correspond to the M offset vectors in a pairwise manner;

$A$ is a matrix with $2\times M$ rows and $2\times N$ columns, each of the rows comprising $2\times N$-2 zeros and a one and a minus one at column positions in each case which correspond to the subimages between which that offset vector is determined which in the vector t corresponds to the component pair corresponding to the respective row;

$W$ is a matrix with $2\times M$ rows and $2\times M$ columns;

$C$ is a matrix with $2\times N$ columns, each of the rows comprising $2\times N$-2 zeros and a one and a minus one at column positions in each case which correspond to the subimages which immediately follow each other along the capturing path; and

$b$ is a vector whose components depend on the error statistics.

4. Apparatus as claimed in claim 3, wherein $W$ is a diagonal matrix whose diagonal components $W_{ii}$ in the respective row i of the matrix $W$ correspond to a measure of a similarity of the subimages between which the offset vector at the corresponding component of the vector t is determined, in an overlap area of same as is defined by this very offset vector.

5. Apparatus as claimed in any of the previous claims, wherein the processor (14) is configured to determine the error statistics on the basis of at least some of the offset vectors and of the differences of the capturing positions for those pairs of subimages for which the respective offset vectors are determined.

6. Apparatus as claimed in claim 5, wherein the processor (14) is configured to determine, as the error statistics, a central tendency and a dispersion of a distribution (4040, 42) of deviations between the at least some of the offset vectors and the difference of the capturing positions of the subimages for which said some of the offset vectors are determined in each case.

7. Apparatus as claimed in any of the previous claims, wherein the capturing device (12) is configured such that the two-dimensional distribution of capturing positions essentially corresponds to a regular two-dimensional distribution in columns and rows.

8. Apparatus as claimed in any of the previous claims, wherein the processor (14) is configured such that the measure of the deviation is weighted with a measure of a similarity of the overlapping subareas for which the offset vectors are determined in each case.

**9.** Apparatus as claimed in any of the previous claims, wherein the capturing device (12) comprises:

an image sensor (18);
optical device (20) for imaging a field-of-view portion (22) of the object plane (16) onto the image sensor (18);
a relative motion generator (24) for effecting a lateral relative motion between the object plane (16), on the one hand, and the image sensor (18) and the optical device, on the other hand; and
a controller (28) for controlling the relative motion generator (24) and the image sensor, so that the object plane (16) is captured at the two-dimensional distribution of capturing points.

**10.** Apparatus as claimed in claim 9, wherein
the controller (28) is configured to dictate target capturing positions to the relative motion generator (24), to allocate the target capturing positions to the subimages as the capturing positions, and to instruct the image sensor - upon a confirmation signal for confirming that the target positions have been reached by the relative motion generator (24) - to generate a respective subimage, and the relative motion generator (24) is configured to regulate a relative lateral location between the object plane (16), on the one hand, and the image sensor (18) and the optical device (20), on the other hand, for such time until the target capturing positions have been reached, and to then send the confirmation signal to the controller (28) in each case, or
the controller (28) is configured to dictate to the relative motion generator (24) a capturing path and to instruct the image sensor (18) at capturing times to generate a respective subimage, and to instruct the relative motion generator (24) to detect a momentary relative location position which is allocated, as the capturing position, to the subimage generated at the respective capturing time, and the relative motion generator (24) is configured to change the relative location position between the object plane (16), on the one hand, and the image sensor (18) and the optical device (20), on the other hand, in accordance with the capturing path and to detect the momentary relative location position upon the instruction from the controller (28).

**11.** Apparatus as claimed in claims 9 or 10, wherein the optical device (20) comprises a microscope objective, and the relative motion generator (24) comprises a positioning table for displacing a slide which defines the object plane.

**12.** Method of generating a mosaic picture of an object plane (16) for utilization in virtual microscopy, comprising portion-by-portion capturing of the object plane (16) by a capturing device at a two-dimensional distribution of capturing positions so as to obtain subimages which represent pictures of portions of the object plane (16) which mutually overlap, while allocating the capturing positions to the subimages, the capturing device (12) being configured such that the capturing positions allocated to the subimages deviate from actual capturing positions in accordance with error statistics; and
determining, by a processor, offset vectors between pairs of mutually overlapping subimages by means of a similarity analysis of the overlapping subimages; and
solving, by a processor, an optimization problem for finding an optimum set of capturing position variables for the subimages for minimizing a measure of a deviation between the offset vectors of the pairs of mutually overlapping subimages, on the one hand, and differences of the capturing position variables of the pairs of mutually overlapping subimages, on the other hand, while complying with a secondary constraint for the capturing position variables which depends on the error statistics,
said portion-by-portion capturing being performed such that the capturing device (12) sequentially cycles through the two-dimensional distribution of capturing positions in a capturing path (32), and the secondary constraint limits, in dependence on the error statistics, the difference of capturing position variables for pairs of subimages which immediately follow one another along the capturing path.

**13.** Computer program having a program code for performing the method as claimed in claim 12, when the program runs on a computer.

**Revendications**

**1.** Dispositif pour générer une prise de vues en forme de mosaïque d'un plan d'objet (16) à utiliser dans la microscopie virtuelle, avec
un appareil de prise de vues (12) destiné à la prise de vues par section du plan d'objet (16) à une répartition bidimensionnelle de positions de prise de vues, pour obtenir des images partielles qui représentent des prises de vues de sections du plan d'objet (16) se recouvrant mutuellement, tout en attribuant les positions de prise de vues aux images partielles, l'appareil de prise de vues (12) étant réalisé de sorte que les positions de prise de vues associées aux images partielles diffèrent des positions de prise de vues réelles selon une statistique d'erreur; et un processeur (14) destiné à déterminer des vecteurs de décalage entre des paires d'images partielles se recouvrant mutuellement par analyse de similitude des images partielles se recouvrant mutuellement et à résoudre un problème d'optimisation, pour trouver un ensemble optimal de variables de position de prise de vues pour les images partielles, pour minimiser une mesure d'écartement entre les vecteurs de décalage des paires d'images partielles se recouvrant mutuellement, d'une part, et de différences des variables de position de prise de vues des paires d'images partielles se recouvrant mutuellement, d'autre part, tout en respectant une condition accessoire pour les variables de position de prise de vues qui dépend de la statistique d'erreur,

dans lequel le dispositif de prise de vues (12) est réalisé pour parcourir la répartition bidimensionnelle des positions de prise de vues de manière séquentielle dans un parcours de prise de vues (32), le processeur (14) étant réalisé de sorte que la condition accessoire limite les différences des variables de position de prise de vues pour les paires d'images partielles en fonction de la statistique d'erreur qui se suivent immédiatement le long du parcours de prise de vues.

2. Dispositif selon la revendication 1, dans lequel l'appareil de prise de vues (12) est réalisé de sorte que le parcours de prise de vues (32) est un parcours en méandre avec une direction en avant et une direction de retour et une direction d'avance, les positions de prise de vues d'images partielles se suivant immédiatement selon le parcours en zigzag en méandre se situant l'une par rapport à l'autre selon exactement l'une respective des trois directions, la statistique d'erreur pour la direction en avant, la direction de retour et la direction d'avance étant différente, le processeur (14) étant réalisé de sorte que la condition accessoire pour les différences de variables de position de prise de vues pour les paires d'images partielles dont les positions de prise de vues associées se trouvent l'une par rapport à l'autre le long de la direction en avant et pour les paires d'images partielles dont les positions de prise de vues associées se trouvent l'une par rapport à l'autre le long de la direction de retour et pour les paires d'images partielles dont les positions de prise de vues associées se trouvent l'une par rapport à l'autre le long de la direction d'avance soit différente selon la statistique d'erreur.

3. Dispositif selon la revendication 1 ou 2, dans lequel le processeur (14) est réalisé pour résoudre, comme problème d'optimisation, le problème d'optimisation quadratique

$$\arg\min_{p}(\|W(Ap - t)\|^2)$$

avec la condition accessoire

$$Cp \leq b$$

où

$p$ est un vecteur de 2xN composantes qui correspondent par paire aux variables de position de prise de vues des N images partielles;

$t$ est un vecteur de 2xM composantes qui correspondent par paire aux M vecteurs de décalage;

$A$ est une matrice avec 2xM rangées et 2xN colonnes, où les rangées présentent, chacune, 2xN-2 zéros ainsi qu'un 1 et un -1 respectivement à des positions de colonne qui correspondent aux images partielles entre lesquelles est déterminé le vecteur de décalage qui, dans le vecteur $t$, correspond à celui de la paire de composantes correspondant à la rangée respective;

$W$ est une matrice de 2xM rangées et de 2xM colonnes;

$C$ est une matrice avec 2xN colonnes, les rangées présentant, chacune, 2xN-2 zéros ainsi qu'un 1 et un -1 respectivement à des positions de colonnes qui correspondent aux images partielles qui se suivent immédiatement le long du parcours de prise de vues; et

$b$ est un vecteur dont les composantes dépendent de la statistique d'erreur.

4. Dispositif selon la revendication 3, dans lequel $W$ est une matrice diagonale dont les composantes diagonales $W_{ii}$ dans la rangée respective i de la matrice $W$ correspondent à une mesure de similitude des images partielles entre lesquelles est déterminé le vecteur de décalage à la composante correspondante du vecteur t dans une région de recouvrement de ces dernières telle qu'elle est définie précisément par ce vecteur de décalage.

**5.** Dispositif selon l'une des revendications précédentes, dans lequel le processeur (14) est réalisé pour déterminer la statistique d'erreur sur base d'au moins une partie des vecteurs de décalage et des différences entre les positions de prise de vues pour les paires d'images partielles pour lesquelles sont déterminés les vecteurs de décalage respectifs.

**6.** Dispositif selon la revendication 5, dans lequel le processeur (14) est réalisé pour déterminer, comme statistique d'erreur, une tendance centrale et une dispersion d'une répartition (4040, 42) d'écarts entre l'au moins une partie des vecteurs de décalage et la différence entre les positions de prise de vues des images partielles pour lesquelles est chaque fois déterminée la partie des vecteurs de décalage.

**7.** Dispositif selon l'une des revendications précédentes, dans lequel l'appareil de prise de vues (12) est réalisé de sorte que la répartition bidimensionnelle des positions de prise de vues corresponde sensiblement à une répartition bidimensionnelle régulière en colonnes et rangées.

**8.** Dispositif selon l'une des revendications précédentes, dans lequel le processeur (14) est réalisé de sorte que la mesure de l'écart soit pondérée par une mesure de similitude des zones partielles se recouvrant pour lesquelles sont chaque fois déterminés les vecteurs de décalage.

**9.** Dispositif selon l'une des revendications précédentes, dans lequel le dispositif de prise de vues (12) comprend les caractéristiques suivantes:

un capteur d'image (18);
un système optique (20) pour la reproduction d'un segment de champ de vision (22) du plan d'objet (16) sur le capteur d'image (18);
un générateur de mouvement relatif (24) destiné à provoquer un mouvement relatif latéral entre le plan d'objet (16), d'une part, et le capteur d'image (18) et le système optique, d'autre part, et
une commande (28) destinée à commander le générateur de mouvement relatif (24) et le capteur d'image de sorte qu'il soit pris une vue du plan d'objet (16) à la répartition bidimensionnelle de points de prise de vues.

**10.** Dispositif selon l'une des revendications 9, dans lequel
la commande (28) est réalisée pour prédéterminer pour le générateur de mouvement relatif (24) des positions de prise de vues de consigne, pour associer les positions de prise de vue de consigne comme positions de prise de vues aux images partielles et pour indiquer au capteur d'image un signal de confirmation pour confirmer l'atteinte des positions de consigne par le générateur de mouvement relatif (24), pour générer une image partielle respective, et le générateur de mouvement relatif (24) est réalisé pour réguler une position latérale relative entre le plan d'objet (16), d'une part, et le capteur d'image (18) et l'optique (20), d'autre part, jusqu'à ce que soient atteintes les positions de prise de vues de consigne et pour envoyer ensuite chaque fois le signal de confirmation à la commande (28), ou la commande (28) est réalisée pour prédéterminer pour le générateur de mouvement relatif (24) un parcours de prise de vues, et pour indiquer au capteur d'image (18), à des moments de prise de vues, de générer une image partielle respective, et pour indiquer au générateur de mouvement relatif (24) de capter une position relative momentanée qui est associée, comme position de prise de vues, à l'image partielle générée au moment de prise de vues respectif, et le générateur de mouvement relatif (24) est réalisé pour modifier la position relative entre le plan d'objet (16), d'une part, et le capteur d'image (18) et l'optique (20), d'autre part, selon le parcours de prise de vues et pour capter, à l'indication de la commande (28), la position relative momentanée.

**11.** Dispositif selon la revendication 9 ou 10, dans lequel l'optique (20) comprend un objectif de microscope, et le générateur de mouvement relatif (24) présente un plateau de déplacement pour déplacer un porte-objet qui définit le plan d'objet.

**12.** Procédé pour générer une prise de vues en forme de mosaïque d'un plan d'objet (16) à utiliser dans la microscopie virtuelle, avec le fait de
prendre des vues par section du plan d'objet (16) par un appareil de prise de vues à une répartition bidimensionnelle de positions de prise de vues, pour obtenir des images partielles représentant des prises de vue de sections du plan d'objet (16) qui se recouvrent mutuellement, tout en attribuant les positions de prise de vues aux images partielles, l'appareil de prise de vues (12) étant réalisé de sorte que les positions de prise de vues associées aux images partielles diffèrent des positions de prise de vues réelles selon une statistique d'erreur;
déterminer par un processeur des vecteurs de décalage entre des paires d'images partielles se recouvrant mutuellement par analyse de similitude des images partielles se recouvrant; et

résoudre un problème d'optimisation par un processeur pour trouver un ensemble optimal de variables de position de prise de vues pour les images partielles, pour minimiser une mesure d'un écart entre les vecteurs de décalage des paires d'images partielles se recouvrant mutuellement, d'une part, et de différences des variables de position de prise de vues des paires d'images partielles se recouvrant mutuellement, d'autre part, tout en respectant une condition accessoire pour les variables de position de prise de vues qui dépend de la statistique d'erreur,

dans lequel la prise de vues par section est effectuée de sorte que l'appareil de prise de vues (12) parcoure la répartition bidimensionnelle de positions de prise de vues de manière séquentielle dans un parcours de prise de vues (32), et que la condition accessoire limite les différences des variables de position de prise de vues pour les paires d'images partielles en fonction de la statistique d'erreur qui se suivent immédiatement le long du parcours de prise de vues.

13. Programme d'ordinateur avec un code de programme pour réaliser le procédé selon la revendication 12 lorsque le programme est exécuté sur un ordinateur.

FIG 1

FIG 2

FIG 3A

FIG 3B

FIG 3C

FIG 3D

FIG 4A

FIG 4B

FIG 5

FIG 6

$$A = \begin{pmatrix} -1 & 1 & 0 & 0 & 0 & 0 & 0 & 0 & 0 \\ -1 & 0 & 0 & 0 & 0 & 1 & 0 & 0 & 0 \\ 0 & -1 & 1 & 0 & 0 & 0 & 0 & 0 & 0 \\ 0 & -1 & 0 & 0 & 1 & 0 & 0 & 0 & 0 \\ 0 & 0 & -1 & 1 & 0 & 0 & 0 & 0 & 0 \\ 0 & 0 & 0 & -1 & 1 & 0 & 0 & 0 & 0 \\ 0 & 0 & 0 & -1 & 0 & 0 & 0 & 0 & 1 \\ 0 & 0 & 0 & 0 & -1 & 1 & 0 & 0 & 0 \\ 0 & 0 & 0 & 0 & -1 & 0 & 0 & 1 & 0 \\ 0 & 0 & 0 & 0 & 0 & -1 & 1 & 0 & 0 \\ 0 & 0 & 0 & 0 & 0 & 0 & -1 & 1 & 0 \\ 0 & 0 & 0 & 0 & 0 & 0 & 0 & -1 & 1 \end{pmatrix}$$

# FIG 7A

$$C = \begin{pmatrix}
-1 & 1 & 0 & 0 & 0 & 0 & 0 & 0 & 0 \\
1 & -1 & 0 & 0 & 0 & 0 & 0 & 0 & 0 \\
0 & -1 & 1 & 0 & 0 & 0 & 0 & 0 & 0 \\
0 & 1 & -1 & 0 & 0 & 0 & 0 & 0 & 0 \\
0 & 0 & -1 & 1 & 0 & 0 & 0 & 0 & 0 \\
0 & 0 & 1 & -1 & 0 & 0 & 0 & 0 & 0 \\
0 & 0 & 0 & -1 & 1 & 0 & 0 & 0 & 0 \\
0 & 0 & 0 & 1 & -1 & 0 & 0 & 0 & 0 \\
0 & 0 & 0 & 0 & -1 & 1 & 0 & 0 & 0 \\
0 & 0 & 0 & 0 & 1 & -1 & 0 & 0 & 0 \\
0 & 0 & 0 & 0 & 0 & -1 & 1 & 0 & 0 \\
0 & 0 & 0 & 0 & 0 & 1 & -1 & 0 & 0 \\
0 & 0 & 0 & 0 & 0 & 0 & -1 & 1 & 0 \\
0 & 0 & 0 & 0 & 0 & 0 & 1 & -1 & 0 \\
0 & 0 & 0 & 0 & 0 & 0 & 0 & -1 & 1 \\
0 & 0 & 0 & 0 & 0 & 0 & 0 & 1 & -1
\end{pmatrix}$$

FIG 7B

**EP 2 596 472 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 1998039728 A
- WO 2006023443 A2
- US 20080187208 A1
- US 20060045388 A

### In der Beschreibung aufgeführte Nicht-Patentliteratur

- **F. LEONG ; J. MCGEE.** Automated complete slide digitization: a medium for simultaneous viewing by multiple pathologists. *The Journal of Pathology,* 2001, vol. 195 (4), 508-514
- The virtual microscope for routine pathology based on a pacs system for 6 gb images. **K. SAEGER ; K. SCHLÜNS ; T. SCHRADER ; P. HUFNAGL.** International Congress Series. Elsevier, 2003, vol. 1256, 299-304
- **R. SZELISKI.** Image Alignment and Stitching: A Tutorial. Now Publishers Inc, 2006
- **J. DAVIS.** Mosaics of scenes with moving objects. *Computer Vision and Pattern Recognition, 1998. Proceedings. 1998 IEEE Computer Society Conference,* 23. Juni 1998, 354-360
- A graph-based global registration for 2d mosaics. **E.-Y. KANG ; I. COHEN ; G. MEDIONI.** Proc. 15th International Conference on Pattern Recognition. 2000, vol. 1, 257-260
- Mosaicing of microscope images. **C. SUN ; R. BEARE ; V. HILSENSTEIN ; P. JACKWAY.** Proc. Digital Image Computing: Techniques and Applications DICTA ' 05. 2005, 343-348
- Towards optimal image stitching for virtual microscopy. **B. APPLETON ; A. BRADLEY ; M. WILDERMOTH.** Proc. Digital Image Computing: Techniques and Applications DICTA ' 05. 2005, 299-306
- **D. STECKHAN ; T. BERGEN ; T. WITTENBERG ; S. RUPP.** Efficient large scale image stitching for virtual microscopy. *Proceedings of the 30th Annual International Conference of the IEEE EMBS,* August 2008, 4019-4023
- **D. STECKHAN ; T. WITTENBERG.** Optimized graph-based mosaicing for virtual microscopy. *Medical Imaging 2009: Image Processing,* Januar 2009, vol. 7259
- **H. FOROOSH ; J. ZERUBIA ; M. BERTHOD.** Extension of phase correlation to subpixel registration. *IEEE Trans. Image Processing,* 2002, vol. 11 (3), 188-200
- **J. PROAKIS ; M. SALEHI.** Digital Communications. McGraw-Hill, 1995
- **B. JÄHNE.** Digital image processing: concepts, algorithms and scientific applications. Springer-Verlag, 1991
- Fließende" Überblendung von Endoskopiebildern für die Erstellung eines Mosaiks. **D. WALD ; M. REEFF ; G. SZKELY ; P. CATTIN ; D. PAULUS.** Bildverarbeitung für die Medizin 2005. Springer, 2005, vol. 3, 287-291
- **KUHN, H. ; TUCKER.** Nonlinear programming. *ACM SIGMAP Bulletin,* 1982, 6-18